# EUROPEAN PATENT SPECIFICATION

(11) **EP 4 527 034 B1**
(45) Date of publication and mention of the grant of the patent: **02.12.2026**
(21) Application number: 22942123.5
(22) Date of filing: 20.05.2022
(51) Int. Cl.: H04L 5/00, H04L 5/14, G01S 13/00, G01S 7/00, H04W 72/0446

(54) **MULTI-TRP BASE STATION FOR RADAR SENSING**
MULTI-TRP-BASISSTATION ZUR RADARERFASSUNG
STATION DE BASE MULTI-TRP POUR DÉTECTION RADAR

(43) Date of publication of application: 26.03.2025
(73) Proprietor: QUALCOMM Incorporated, San Diego, CA 92121-1714 (US)
(72) Inventor: DAI, Jing, San Diego, California 92121-1714 (US); HUANG, Min, San Diego, California 92121-1714 (US); WEI, Chao, San Diego, California 92121-1714 (US); ZHENG, Ruiming, San Diego, California 92121-1714 (US); YIN, Mingxi, San Diego, California 92121-1714 (US); XU, Hao, San Diego, California 92121-1714 (US)
(74) Representative: Reddie & Grose LLP
(86) International application number: PCT/CN2022/094067
(87) International publication number: WO 2023/221083

(56) References cited:
- WO-A1-2021/030685
- WO-A1-2022/000228
- CN-A- 114 325 679
- US-A1- 2021 076 417
- US-A1- 2021 076 417
- US-A1- 2022 095 319
- HUAWEI ET AL: "Enhancements on multi-TRP for reliability and robustness in Rel-17", vol. RAN WG1, no. e-Meeting; 20210510 - 20210527, 12 May 2021 (2021-05-12), XP052010721, Retrieved from the Internet <URL:https://ftp.3gpp.org/tsg_ran/WG1_RL1/TSGR1_105-e/Docs/R1-2104267.zip R1-2104267.docx> [retrieved on 20210512]
- LIU AN, HUANG ZHE, LI MIN, WAN YUBO, LI WENRUI, HAN TONY XIAO, LIU CHENCHEN, DU RUI, TAN DANNY KAI PIN, LU JIANMIN, SHEN YUAN, COL: "A Survey on Fundamental Limits of Integrated Sensing and Communication", IEEE COMMUNICATIONS SURVEYS & TUTORIALS, vol. 24, no. 2, 1 January 2022 (2022-01-01), pages 994 - 1034, XP093109544, ISSN: 2373-745X, DOI: 10.1109/COMST.2022.3149272

## Description

### TECHNICAL FIELD

The present disclosure relates generally to communication systems, and more particularly, to a multi-transmit receive point (TRP) network node that may also perform radio detection and ranging (radar) sensing.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

US 2021/076417 A1 discloses aspects relating to integration of sensing and wireless communications. Wireless communication networks can configure and implement both sensing signals and communication signals. Sensing signals, or sensing reference signals, can be used to determine properties of the environment, and do not carry any information or data for the purpose of communications. Communication signals, on the other hand, are signals that carry information or data between network entities. Sensing agents can be used for both passive and active sensing. Sensing agents may be dedicated devices capable of performing passive sensing, active sensing, or both. Sensing agents can also be existing networks device such as user equipment or transmit receive points. Methodologies described there may be particularly beneficial for half-duplex systems, but could also be implemented in full duplex systems.

HUAWEI ET AL: "Enhancements on multi-TRP for reliability and robustness in Rel-17", 3GPP DRAFT; R1-2104267, 3RD GENERATION PARTNERSHIP PROJECT (3GPP), MOBILE COMPETENCE CENTRE 650, ROUTE DES LUCIOLES; F-06921 SOPHIA-ANTIPOLIS CEDEX; FRANCE, vol. RAN WG1, no. e-Meeting; 20210510 - 20210527, 12 May 2021, discusses enhancements of multi-TRP PUSCH and PUCCH transmission to improve reliability and robustness.

### BRIEF SUMMARY

The invention is defined in the independent claims. Optional features are defined in the dependent claims. Any embodiment, example, aspect or implementation not being part of the claims, is only presented as information.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 illustrates typical circuitry in a telecommunications device that can perform radio frequency (RF) communications and RF sensing, according to aspects of the disclosure.
FIG. 5 is a diagram illustrating an mTRP base station including or associated with two TRPs.
FIGs. 6A, 6B, and 6C are diagrams illustrating aspects of a technique for using an mTRP base station for radar sensing according to one or more aspects.
FIG. 7 is an example diagram illustrating one or more RX-TX switches according to one or more aspects.
FIG. 8A is an example diagram illustrating TCI state selection for a multi-slot TDMed communication scheduled across the boundary between sensing and non-sensing slots according to one or more aspects.
FIG. 8B is an example diagram illustrating TCI state selection for a multi-slot TDMed communication scheduled across the boundary between sensing and non-sensing slots based on the half-half pattern according to one or more aspects.
FIG. 9 is an example diagram illustrating resolution of a conflict between dynamically scheduled mTRP communication and dynamically scheduled radar sensing according to one or more aspects.
FIG. 10 is an example diagram illustrating a potential sensing slot configured by a base station according to one or more aspects.
FIG. 11 is a flow diagram of a method of wireless communication.
FIG. 12 is a flowchart of a method of wireless communication.
FIG. 13 is a flowchart of a method of wireless communication.
FIG. 14 is a flowchart of a method of wireless communication.
FIG. 15 is a diagram illustrating an example of a hardware implementation for an example apparatus and/or network entity.
FIG. 16 is a diagram illustrating an example of a hardware implementation for an example network entity.

### DETAILED DESCRIPTION

In some aspects, the use of the integrated sensing and communication (ISAC) may enable a cellular communication network to provide unmanned aerial vehicle (UAV) sensing services. In particular, for a cooperative UAV, the UAV sensing services may include providing the UAV operator with the surrounding airspace information (including flight dynamics of other UAVs, airspace environments, etc.). Further, the UAV sensing services for a cooperative UAV may include supervision of the UAV to ensure consistency with a pre-approved flight plan of the UAV. For a non-cooperative UAV, the UAV sensing services may include intruder UAV detection for a restricted or forbidden zone (e.g., an airport).

While using an mTRP system for both sensing and cellular wireless communication, a consecutive (long and uninterrupted) sensing duration including multiple slots may be desired for several reasons. For example, a consecutive sensing duration may lead to less interruption associated with the TX-RX or RX-TX switch.

Moreover, phase continuity over time may be desired for performing Doppler-related estimation. A consecutive sensing duration may also be desired for this reason. For example, it may take several ms to tens of ms to perform a Doppler estimation of a micro-Doppler signature associated with propellers of a UAV target in order to identify the UAV target. A consecutive sensing duration that may ensure phase continuity over a sufficiently long period may be helpful to the performance of the Doppler estimation.

In some configurations, for semi-statically configured radar sensing (e.g., for target UAV detection), optimization may be performed for the single TRP (sTRP)-mTRP slot pattern associated with periodic consecutive sensing slots (occasions), where sTRP communication may be performed in the same sensing slots. In some additional configurations, for dynamically (on-demand) triggered radar sensing (e.g., for UAV tracking after a UAV is detected), the behavior of the system may be defined where the same slots are already scheduled for mTRP communication (sensing and mTRP communication may not be performed in a same slot).

In one or more aspects, a network node may schedule a first set of slots for simultaneous sensing and sTRP communication with a UE. The network node may transmit a first indication scheduling the first set of slots for simultaneous sensing and sTRP communication to the UE. The network node may schedule a second set of slots for mTRP communication with the UE. The network node may transmit a second indication scheduling the second set of slots for mTRP communication to the UE. The first set of slots and the second set of slots may include at least one same slot. The network node may be associated with a first TRP and a second TRP. Accordingly, the sTRP-mTRP slot pattern associated with periodic consecutive sensing slots may be optimized. Furthermore, the behavior of the system may be defined where a conflict may exist at one or more slots between a scheduled mTRP communication and a scheduled simultaneous sensing and sTRP communication.

The detailed description set forth below in connection with the drawings describes various configurations and does not represent the only configurations in which the concepts described herein may be practiced. The detailed description includes specific details for the purpose of providing a thorough understanding of various concepts. However, these concepts may be practiced without these specific details. In some instances, well known structures and components are shown in block diagram form in order to avoid obscuring such concepts.

Several aspects of telecommunication systems are presented with reference to various apparatus and methods. These apparatus and methods are described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software, whether referred to as software, firmware, middleware, microcode, hardware description language, or otherwise, shall be construed broadly to mean instructions, instruction sets, code, code segments, program code, programs, subprograms, software components, applications, software applications, software packages, routines, subroutines, objects, executables, threads of execution, procedures, functions, or any combination thereof.

Accordingly, in one or more example aspects, implementations, and/or use cases, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects, implementations, and/or use cases are described in this application by illustration to some examples, additional or different aspects, implementations and/or use cases may come about in many different arrangements and scenarios. Aspects, implementations, and/or use cases described herein may be implemented across many differing platform types, devices, systems, shapes, sizes, and packaging arrangements. For example, aspects, implementations, and/or use cases may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described examples may occur. Aspects, implementations, and/or use cases may range a spectrum from chip-level or modular components to non-modular, non-chip-level implementations and further to aggregate, distributed, or original equipment manufacturer (OEM) devices or systems incorporating one or more techniques herein. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). Techniques described herein may be practiced in a wide variety of devices, chip-level components, systems, distributed arrangements, aggregated or disaggregated components, end-user devices, etc. of varying sizes, shapes, and constitution.

Deployment of communication systems, such as 5G NR systems, may be arranged in multiple manners with various components or constituent parts. In a 5G NR system, or network, a network node, a network entity, a mobility element of a network, a radio access network (RAN) node, a core network node, a network element, or a network equipment, such as a base station (BS), or one or more units (or one or more components) performing base station functionality, may be implemented in an aggregated or disaggregated architecture. For example, a BS (such as a Node B (NB), evolved NB (eNB), NR BS, 5G NB, access point (AP), a transmit receive point (TRP), or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU can be implemented as virtual units, i.e., a virtual central unit (VCU), a virtual distributed unit (VDU), or a virtual radio unit (VRU).

Base station operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

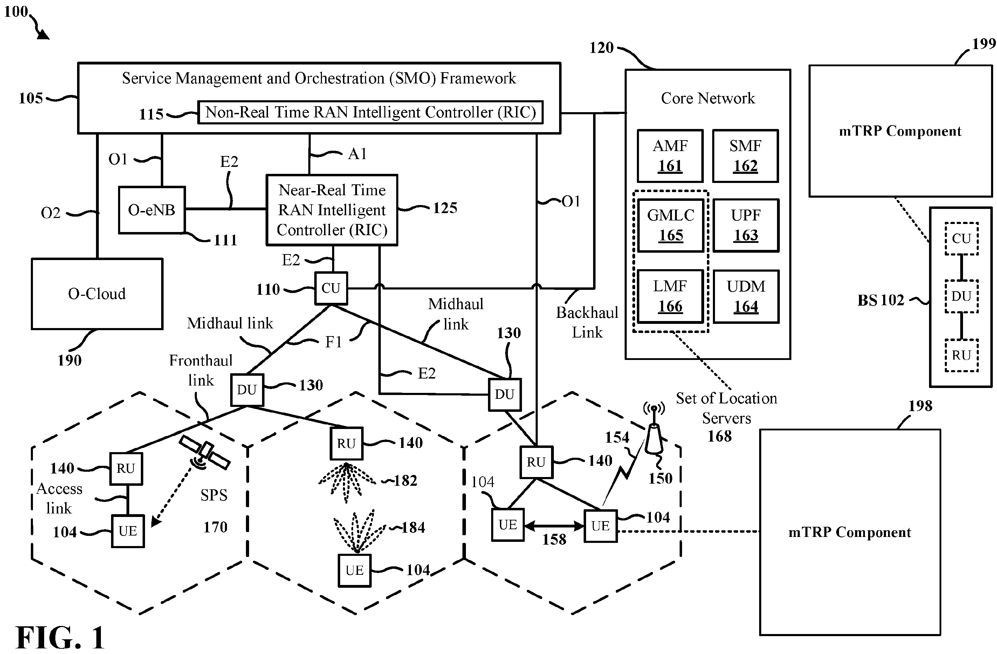

FIG. 1 is a diagram 100 illustrating an example of a wireless communications system and an access network. The illustrated wireless communications system includes a disaggregated base station architecture. The disaggregated base station architecture may include one or more CUs 110 that can communicate directly with a core network 120 via a backhaul link, or indirectly with the core network 120 through one or more disaggregated base station units (such as a Near-Real Time (Near-RT) RAN Intelligent Controller (RIC) 125 via an E2 link, or a Non-Real Time (Non-RT) RIC 115 associated with a Service Management and Orchestration (SMO) Framework 105, or both). A CU 110 may communicate with one or more DUs 130 via respective midhaul links, such as an F1 interface. The DUs 130 may communicate with one or more RUs 140 via respective fronthaul links. The RUs 140 may communicate with respective UEs 104 via one or more radio frequency (RF) access links. In some implementations, the UE 104 may be simultaneously served by multiple RUs 140.

Each of the units, i.e., the CUs 110, the DUs 130, the RUs 140, as well as the Near-RT RICs 125, the Non-RT RICs 115, and the SMO Framework 105, may include one or more interfaces or be coupled to one or more interfaces configured to receive or to transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or to transmit signals over a wired transmission medium to one or more of the other units. Additionally, the units can include a wireless interface, which may include a receiver, a transmitter, or a transceiver (such as an RF transceiver), configured to receive or to transmit signals, or both, over a wireless transmission medium to one or more of the other units.

In some aspects, the CU 110 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 110. The CU 110 may be configured to handle user plane functionality (i.e., Central Unit - User Plane (CU-UP)), control plane functionality (i.e., Central Unit - Control Plane (CU-CP)), or a combination thereof. In some implementations, the CU 110 can be logically split into one or more CU-UP units and one or more CU-CP units. The CU-UP unit can communicate bidirectionally with the CU-CP unit via an interface, such as an E1 interface when implemented in an O-RAN configuration. The CU 110 can be implemented to communicate with the DU 130, as necessary, for network control and signaling.

The DU 130 may correspond to a logical unit that includes one or more base station functions to control the operation of one or more RUs 140. In some aspects, the DU 130 may host one or more of a radio link control (RLC) layer, a medium access control (MAC) layer, and one or more high physical (PHY) layers (such as modules for forward error correction (FEC) encoding and decoding, scrambling, modulation, demodulation, or the like) depending, at least in part, on a functional split, such as those defined by 3GPP. In some aspects, the DU 130 may further host one or more low PHY layers. Each layer (or module) can be implemented with an interface configured to communicate signals with other layers (and modules) hosted by the DU 130, or with the control functions hosted by the CU 110.

Lower-layer functionality can be implemented by one or more RUs 140. In some deployments, an RU 140, controlled by a DU 130, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 140 can be implemented to handle over the air (OTA) communication with one or more UEs 104. In some implementations, real-time and non-real-time aspects of control and user plane communication with the RU(s) 140 can be controlled by the corresponding DU 130. In some scenarios, this configuration can enable the DU(s) 130 and the CU 110 to be implemented in a cloud-based RAN architecture, such as a vRAN architecture.

The SMO Framework 105 may be configured to support RAN deployment and provisioning of non-virtualized and virtualized network elements. For non-virtualized network elements, the SMO Framework 105 may be configured to support the deployment of dedicated physical resources for RAN coverage requirements that may be managed via an operations and maintenance interface (such as an O1 interface). For virtualized network elements, the SMO Framework 105 may be configured to interact with a cloud computing platform (such as an open cloud (O-Cloud) 190) to perform network element life cycle management (such as to instantiate virtualized network elements) via a cloud computing platform interface (such as an O2 interface). Such virtualized network elements can include, but are not limited to, CUs 110, DUs 130, RUs 140 and Near-RT RICs 125. In some implementations, the SMO Framework 105 can communicate with a hardware aspect of a 4G RAN, such as an open eNB (O-eNB) 111, via an O1 interface. Additionally, in some implementations, the SMO Framework 105 can communicate directly with one or more RUs 140 via an O1 interface. The SMO Framework 105 also may include a Non-RT RIC 115 configured to support functionality of the SMO Framework 105.

The Non-RT RIC 115 may be configured to include a logical function that enables non-real-time control and optimization of RAN elements and resources, artificial intelligence (AI) / machine learning (ML) (AI/ML) workflows including model training and updates, or policy-based guidance of applications/features in the Near-RT RIC 125. The Non-RT RIC 115 may be coupled to or communicate with (such as via an A1 interface) the Near-RT RIC 125. The Near-RT RIC 125 may be configured to include a logical function that enables near-real-time control and optimization of RAN elements and resources via data collection and actions over an interface (such as via an E2 interface) connecting one or more CUs 110, one or more DUs 130, or both, as well as an O-eNB, with the Near-RT RIC 125.

In some implementations, to generate AI/ML models to be deployed in the Near-RT RIC 125, the Non-RT RIC 115 may receive parameters or external enrichment information from external servers. Such information may be utilized by the Near-RT RIC 125 and may be received at the SMO Framework 105 or the Non-RT RIC 115 from non-network data sources or from network functions. In some examples, the Non-RT RIC 115 or the Near-RT RIC 125 may be configured to tune RAN behavior or performance. For example, the Non-RT RIC 115 may monitor long-term trends and patterns for performance and employ AI/ML models to perform corrective actions through the SMO Framework 105 (such as reconfiguration via O1) or via creation of RAN management policies (such as A1 policies).

At least one of the CU 110, the DU 130, and the RU 140 may be referred to as a base station 102. Accordingly, a base station 102 may include one or more of the CU 110, the DU 130, and the RU 140 (each component indicated with dotted lines to signify that each component may or may not be included in the base station 102). The base station 102 provides an access point to the core network 120 for a UE 104. The base stations 102 may include macrocells (high power cellular base station) and/or small cells (low power cellular base station). The small cells include femtocells, picocells, and microcells. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links between the RUs 140 and the UEs 104 may include uplink (UL) (also referred to as reverse link) transmissions from a UE 104 to an RU 140 and/or downlink (DL) (also referred to as forward link) transmissions from an RU 140 to a UE 104. The communication links may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL wireless wide area network (WWAN) spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, Bluetooth, Wi-Fi based on the Institute of Electrical and Electronics Engineers (IEEE) 802.11 standard, LTE, or NR.

The wireless communications system may further include a Wi-Fi AP 150 in communication with UEs 104 (also referred to as Wi-Fi stations (STAs)) via communication link 154, e.g., in a 5 GHz unlicensed frequency spectrum or the like. When communicating in an unlicensed frequency spectrum, the UEs 104 / AP 150 may perform a clear channel assessment (CCA) prior to communicating in order to determine whether the channel is available.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (71 GHz - 114.25 GHz), and FR5 (114.25 GHz - 300 GHz). Each of these higher frequency bands falls within the EHF band.

With the above aspects in mind, unless specifically stated otherwise, the term "sub-6 GHz" or the like if used herein may broadly represent frequencies that may be less than 6 GHz, may be within FR1, or may include mid-band frequencies. Further, unless specifically stated otherwise, the term "millimeter wave" or the like if used herein may broadly represent frequencies that may include mid-band frequencies, may be within FR2, FR4, FR2-2, and/or FR5, or may be within the EHF band.

The base station 102 and the UE 104 may each include a plurality of antennas, such as antenna elements, antenna panels, and/or antenna arrays to facilitate beamforming. The base station 102 may transmit a beamformed signal 182 to the UE 104 in one or more transmit directions. The UE 104 may receive the beamformed signal from the base station 102 in one or more receive directions. The UE 104 may also transmit a beamformed signal 184 to the base station 102 in one or more transmit directions. The base station 102 may receive the beamformed signal from the UE 104 in one or more receive directions. The base station 102 / UE 104 may perform beam training to determine the best receive and transmit directions for each of the base station 102 / UE 104. The transmit and receive directions for the base station 102 may or may not be the same. The transmit and receive directions for the UE 104 may or may not be the same.

The base station 102 may include and/or be referred to as a gNB, Node B, eNB, an access point, a base transceiver station, a radio base station, a radio transceiver, a transceiver function, a basic service set (BSS), an extended service set (ESS), a transmit reception point (TRP), network node, network entity, network equipment, or some other suitable terminology. The base station 102 can be implemented as an integrated access and backhaul (IAB) node, a relay node, a sidelink node, an aggregated (monolithic) base station with a baseband unit (BBU) (including a CU and a DU) and an RU, or as a disaggregated base station including one or more of a CU, a DU, and/or an RU. The set of base stations, which may include disaggregated base stations and/or aggregated base stations, may be referred to as next generation (NG) RAN (NG-RAN).

The core network 120 may include an Access and Mobility Management Function (AMF) 161, a Session Management Function (SMF) 162, a User Plane Function (UPF) 163, a Unified Data Management (UDM) 164, one or more location servers 168, and other functional entities. The AMF 161 is the control node that processes the signaling between the UEs 104 and the core network 120. The AMF 161 supports registration management, connection management, mobility management, and other functions. The SMF 162 supports session management and other functions. The UPF 163 supports packet routing, packet forwarding, and other functions. The UDM 164 supports the generation of authentication and key agreement (AKA) credentials, user identification handling, access authorization, and subscription management. The one or more location servers 168 are illustrated as including a Gateway Mobile Location Center (GMLC) 165 and a Location Management Function (LMF) 166. However, generally, the one or more location servers 168 may include one or more location/positioning servers, which may include one or more of the GMLC 165, the LMF 166, a position determination entity (PDE), a serving mobile location center (SMLC), a mobile positioning center (MPC), or the like. The GMLC 165 and the LMF 166 support UE location services. The GMLC 165 provides an interface for clients/applications (e.g., emergency services) for accessing UE positioning information. The LMF 166 receives measurements and assistance information from the NG-RAN and the UE 104 via the AMF 161 to compute the position of the UE 104. The NG-RAN may utilize one or more positioning methods in order to determine the position of the UE 104. Positioning the UE 104 may involve signal measurements, a position estimate, and an optional velocity computation based on the measurements. The signal measurements may be made by the UE 104 and/or the serving base station 102. The signals measured may be based on one or more of a satellite positioning system (SPS) 170 (e.g., one or more of a Global Navigation Satellite System (GNSS), global position system (GPS), non-terrestrial network (NTN), or other satellite position/location system), LTE signals, wireless local area network (WLAN) signals, Bluetooth signals, a terrestrial beacon system (TBS), sensor-based information (e.g., barometric pressure sensor, motion sensor), NR enhanced cell ID (NR E-CID) methods, NR signals (e.g., multi-round trip time (Multi-RTT), DL angle-of-departure (DL-AoD), DL time difference of arrival (DL-TDOA), UL time difference of arrival (UL-TDOA), and UL angle-of-arrival (UL-AoA) positioning), and/or other systems/signals/sensors.

Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

Referring again to FIG. 1, in certain aspects, the UE 104 may include an mTRP component 198 that may be configured to receive a first indication scheduling a first set of slots for simultaneous sensing and sTRP communication from a network node. The mTRP component 198 may be configured to receive a second indication scheduling a second set of slots for mTRP communication from the network node. The first set of slots and the second set of slots may include at least one same slot. The network node may be associated with a first TRP and a second TRP. In certain aspects, the base station 102 may include an mTRP component 199 that may be configured to schedule a first set of slots for simultaneous sensing and sTRP communication with a UE. The mTRP component 199 may be configured to schedule a second set of slots for mTRP communication with the UE. The first set of slots and the second set of slots may include at least one same slot. The network node may be associated with a first TRP and a second TRP. Although the following description may be focused on 5G NR, the concepts described herein may be applicable to other similar areas, such as LTE, LTE-A, CDMA, GSM, and other wireless technologies.

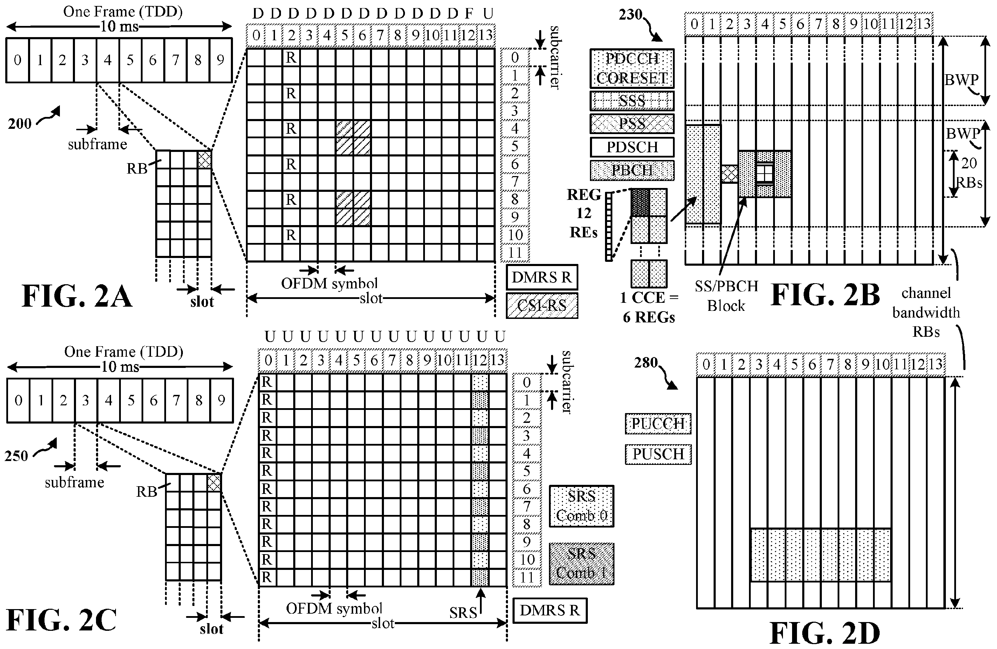

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| **µ** | **SCS Δ*f*** = **2*^{µ} ·* 15[kHz]** | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* _{*} 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

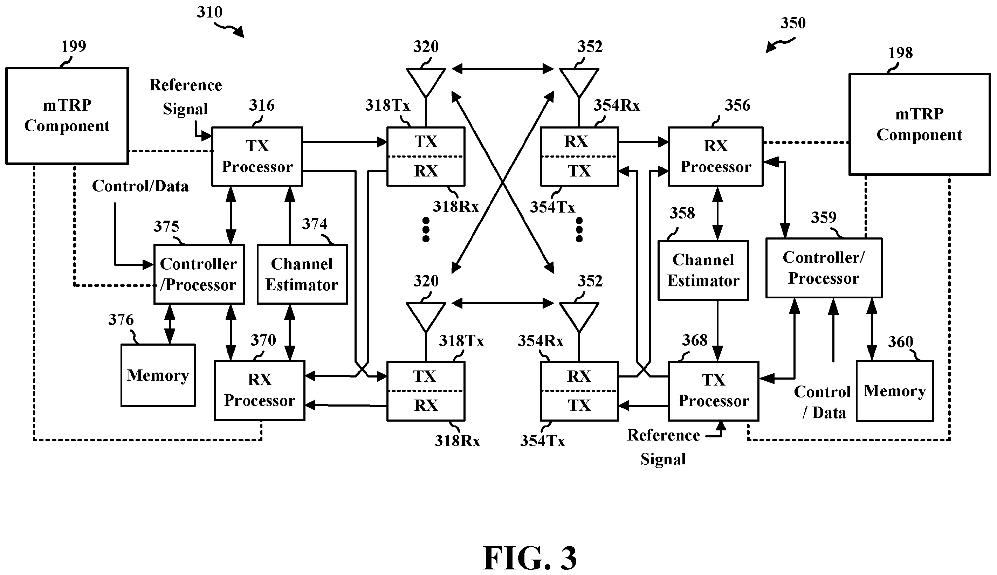

FIG. 3 is a block diagram of a base station 310 in communication with a UE 350 in an access network. In the DL, Internet protocol (IP) packets may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318Tx. Each transmitter 318Tx may modulate a radio frequency (RF) carrier with a respective spatial stream for transmission.

At the UE 350, each receiver 354Rx receives a signal through its respective antenna 352. Each receiver 354Rx recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354Tx. Each transmitter 354Tx may modulate an RF carrier with a respective spatial stream for transmission.

The UL transmission is processed at the base station 310 in a manner similar to that described in connection with the receiver function at the UE 350. Each receiver 318Rx receives a signal through its respective antenna 320. Each receiver 318Rx recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets. The controller/processor 375 is also responsible for error detection using an ACK and/or NACK protocol to support HARQ operations.

At least one of the TX processor 368, the RX processor 356, and the controller/processor 359 may be configured to perform aspects in connection with the mTRP component 198 of FIG. 1.

At least one of the TX processor 316, the RX processor 370, and the controller/processor 375 may be configured to perform aspects in connection with the mTRP component 199 of FIG. 1.

Integrated sensing and communication (ISAC) is a term that describes the convergence of RF communication and RF sensing, such as radio detection and ranging (radar). The digitizing trend of commercial radar is converging the architecture of its RF frontend (i.e., all the components in the receiver that process the signal at the original incoming radio frequency, before it is converted to a lower intermediate frequency) and its waveforms to be more and more similar to frontend architecture and waveforms for communication. For example, the waveforms used for vehicular radar are evolving from analog-heavy frequency modulated carrier waves (FMCWs) to orthogonal frequency division multiplexed (OFDM) symbols such as are used in telecommunications. In addition, the carrier frequencies that are used for telecommunications are shifting to progressively higher bands (24 GHz, 60 GHz, 77 GHz, and potentially even higher) including frequencies used for radar.

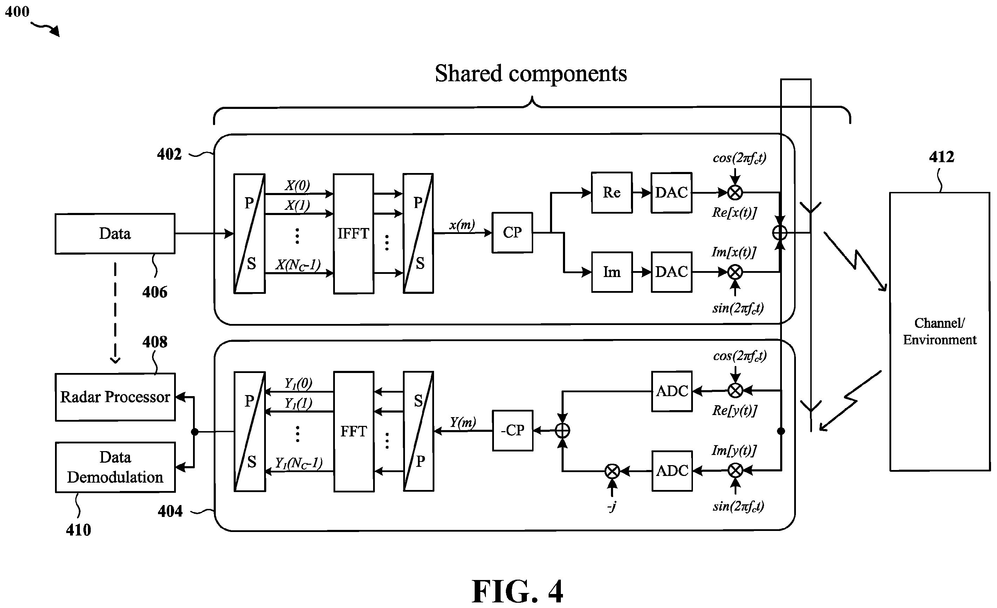

FIG. 4 illustrates typical circuitry in a device 400 that can perform RF communications and RF sensing, according to aspects of the disclosure. In FIG. 4, device 400 includes a transmitter circuit 402 and a receiver circuit 404. A data source 406 provides communications data and sensing data to the transmitter circuit 402. The receiver circuit 404 provides received data to a radar processor circuit 408 and to a data demodulation circuit 410. The device 400 operates within an environment 412, which may also be referred to as a channel. The data source 406 also provides sensing data to the radar processor circuit 408. As can be seen in FIG. 4, the use of OFDM symbols for RF sensing provides the benefit that the same RF frontend can be used for both RF communication and RF sensing, i.e., both functions can make use of shared components.

Thus, ISAC can provide benefits such as cost effectiveness, e.g., there can be a joint RF hardware platform for communication and radar, and spectrum effectiveness, e.g., the always-on availability of spectrum for both the communication and radar functions. Another benefit is that RF sensing is an additional incentive for market introduction of vehicle to everything (V2X) communications. The use cases of the ISAC may include macro sensing use cases (e.g., meteorological monitoring, autonomous driving, dynamic map, low-altitude airspace management (unmanned aerial vehicle (UAV) sensing), intruder detection, etc.) and micro sensing use cases (e.g., gesture recognition, vital signal detection, high-resolution imaging in terahertz (THz) bands, etc.). Use cases of the ISAC may also include sensing assisted communication such as beam management.

In some aspects, the general processing of operations of OFDM radar at the receiver side, after the FFT, include the following: (1) removal of modulated symbols (data content), which cancels the resource element (RE)-wise modulated symbols by dividing the transmit value of each at the associated RE; (2) time-domain (symbol-wise) FFT for target velocity (Doppler) estimation; and (3) frequency-domain (subcarrier-wise) IFFT for target range estimation. Operations (2) and (3) are similar to the 2D-FFT processing of FMCW radar, and the performance of OFDM radar is similar to the performance of FMCW radar.

It is noted that if the modulated symbols (data content) of the transmitted OFDM signal is known at the receiver, OFDM signals can be used for radar purpose. For monostatic radar, where the transmitter and the receiver are the same node, the receiver naturally knows the exact transmitted signal. For bistatic radar, where the transmitter and the receiver are different nodes, the receiver can nevertheless know the exact transmitted signal, e.g., when a known or predefined transmit signal sequence is used, or if the data is decoded correctly, such as a received communication signal that passed a cyclic redundancy check (CRC). It is also noted that, unlike for phase modulated carrier wave (PMCW) based radar, where the autocorrelation property of the sequence may be essential, for OFDM radar, a specific sequence is not mandatory, except that the peak to average power ratio (PAPR) may be considered. For example, an OFDM signal based on a Zadoff-Chu sequence has constant amplitude, and thus would have a higher signal to noise ratio (SNR) at the receiver side.

The following are some considerations for NR based ISAC: for range resolution, wideband signals may be considered; for stable availability during observation time, broadcast signals, rather than demand-triggered data channels, may be considered. Therefore, the following signals or channels are considered for co-purposing as a radar signal for sensing:
For downlink: SSB, which is wideband from a system point of view; CSI-RS; and downlink positioning reference signal (DL-PRS).
For uplink: SRS; and sidelink positioning reference signal (SL-PRS).

The table below lists various reference signals and their potential use for NR based ISAC.

| Entity | Signal/channel | | | | |
|---|---|---|---|---|---|
| | SSB | CSI-RS | DL-PRS | SRS | SL-RS |
| base station/network node (e.g., roadside unit (RSU)) | Monostatic radar (Tx+Rx), or Rx of bistatic radar | | | Rx of bistatic radar | |
| UE (e.g., vehicle) | N/A | Rx of bistatic radar | | Monostatic radar (Tx+Rx), or Rx of bistatic radar | |

Multiple input, multiple output (MIMO) antennas include many antenna elements, where each element can operate as a TX antenna element or an RX antenna element.

In some aspects, the use of the ISAC may enable a cellular communication network to provide UAV sensing services. In particular, for a cooperative UAV, the UAV sensing services may include providing the UAV operator with the surrounding airspace information (including flight dynamics of other UAVs, airspace environments, etc.). Further, the UAV sensing services for a cooperative UAV may include supervision of the UAV to ensure consistency with a pre-approved flight plan of the UAV. For a non-cooperative UAV, the UAV sensing services may include intruder UAV detection for a restricted or forbidden zone (e.g., an airport).

Leveraging a cellular communication network (e.g., a 4G, 5G, 6G, etc., cellular network) to provide UAV sensing services may be associated with a number of benefits. For example, because the network nodes are already installed at existing physical sites, the deployment cost associated with the UAV sensing services may be reduced. Further, shared RF/baseband hardware shared between the cellular communication function and the UAV sensing services may help to save hardware cost. Moreover, the cellular band may potentially be reused for radar sensing, which may lead to a higher spectrum efficiency. The reuse of the cellular band for radar sensing may become more likely as more mid-bands between 3 GHz and 24 Hz are expected to be allocated to cellular wireless communication in the future (Existing spectrum for the commercial UAV detection radar may include the X band (8 GHz - 12 GHz) or the Ku band (12 GHz - 18 GHz)). In addition, for wide area airspace management with mobile targets (e.g., UAVs in operation), the networking of the cellular wireless communication system may be naturally suited for cooperative sensing and target tracking.

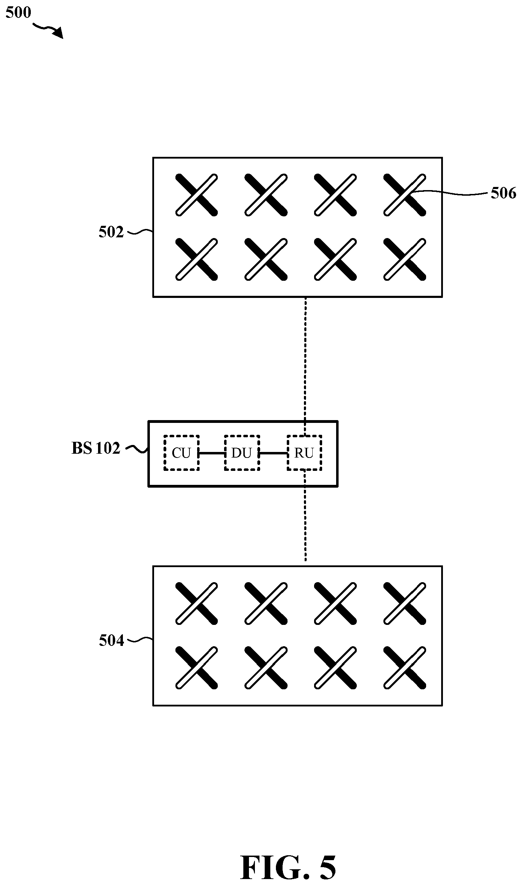

FIG. 5 is a diagram 500 illustrating an mTRP base station including or associated with two TRPs. Hereinafter a TRP may also be referred to as a panel or an antenna panel. The base station 102, and in particular, the RU of the base station 102, may be associated with a first TRP 502 (which may also be referred to as TRP #0) and a second TRP 504 (which may also be referred to as TRP #1). In one or more configurations, each of the first TRP 502 or the second TRP 504 may have an array of antenna element pairs 506. In some configurations, the first TRP 502 and the second TRP 504 may be spatially separated by a distance.

In some configurations, the base station 102 may use the two spatially separated TRPs to perform full-duplex communication, where one of the TRPs may serve as the TX TRP, and the other of the TRPs may at the same time serve as the RX TRP. In some configurations, the base station 102 may use the two TRPs based on a time pattern. For example, the base station 102 may alternately use the first TRP 502 and the second TRP 504 for communication (uplink (RX) or downlink (TX)) in a series of slots (e.g., the base station 102 may use the first TRP 502 in a first slot, use the second TRP 504 in a second slot immediately subsequent to the first slot, use the first TRP 502 in a third slot immediately subsequent to the second slot, use the second TRP 504 in a fourth slot immediately subsequent to the third slot, etc.).

In some configurations where the RU of the base station 102 includes an ISAC component, the base station 102 may use the two TRPs for both wireless communication and radar sensing, as will be described in further detail below.

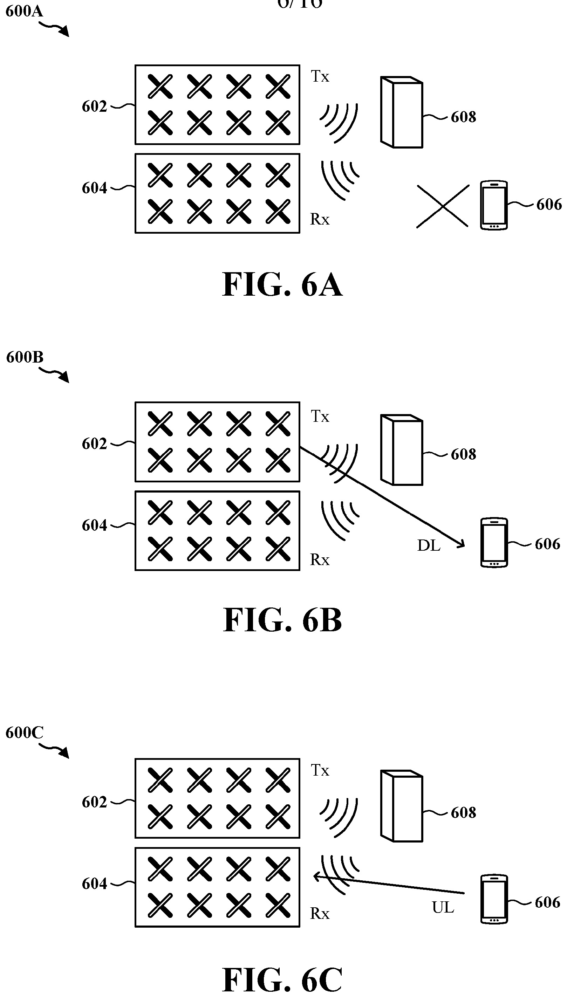

FIGs. 6A, 6B, and 6C are diagrams 600A, 600B, and 600C illustrating aspects of a technique for using an mTRP base station for radar sensing according to one or more aspects. For a mTRP base station, the spatially distributed TRPs (antenna arrays) may be leveraged for bistatic or multi-static radar operation. FIGs. 6A, 6B, and 6C illustrate bistatic radar sensing where the two TRPs 602 and 604 may operate as the TX node and the RX node, respectively, for radio operations. In one or more configurations, when radar sensing is not performed, both TRPs 602 and 604 may operate as TRPs in a conventional mTRP system (i.e., a system where multiple network-side remote radio heads (RRHs) (within a physical cell or from different cells) may be used for transmission with a UE for downlink and uplink), where both TRPs may be used for cellular wireless communication (either downlink or uplink).

In one or more configurations, when radar sensing is being performed, up to just one TRP in the two TRPs 602 and 604 may be used for communication, that is, in some configurations, the system may operate in an sTRP communication mode (i.e., a UE may communicate with a single network-side RRH) when radar sensing is being performed, or alternative, in some other configurations, the system may not perform wireless communication functionality at all when radar sensing is being performed using the two TRPs 602 and 604.

In the example configuration illustrated in FIG. 6A, no cellular wireless communication with the UE 606 may take place when the system is performing radar sensing (e.g., to detect an object 608 such as a UAV). In other words, sensing may be simply treated as an interruption to the wireless communication. Example configurations illustrated in FIGs. 6B and 6C relate to simultaneous radar sensing and sTRP wireless communication. In particular, in FIG. 6B, the first TRP 602, while operating as the TX node for radar sensing, may at the same time transmit downlink communication to the UE 606 based on a multiplexing technique. In an alternative configuration, in FIG. 6C, the second TRP 604, while operating as the RX node for radar sensing, may at the same time receive uplink communication from the UE 606 based on a multiplexing technique. The example configurations illustrated in FIGs. 6B and 6C may be the focus of the aspects of the disclosure that will be described in detail below.

In one or more configurations, within sensing occasions or slots, the operation illustrated in FIG. 6B (i.e., sTRP DL) and the operation illustrated in FIG. 6C (i.e., sTRP UL) may be performed alternately based on a time pattern (e.g., using time division multiplexing (TDM)). In one or more configurations, within sensing slots, the technique used for multiplexing the radar sensing with the sTRP communication may include frequency division multiplexing (FDM) and spatial division multiplexing (SDM) (e.g., upward sensing for the UAV target and simultaneous communication with a terrestrial UE).

While using an mTRP system for both sensing and cellular wireless communication, a consecutive (long and uninterrupted) sensing duration including multiple slots may be desired for several reasons. For example, a consecutive sensing duration may lead to less interruption associated with the TX-RX or RX-TX switch.

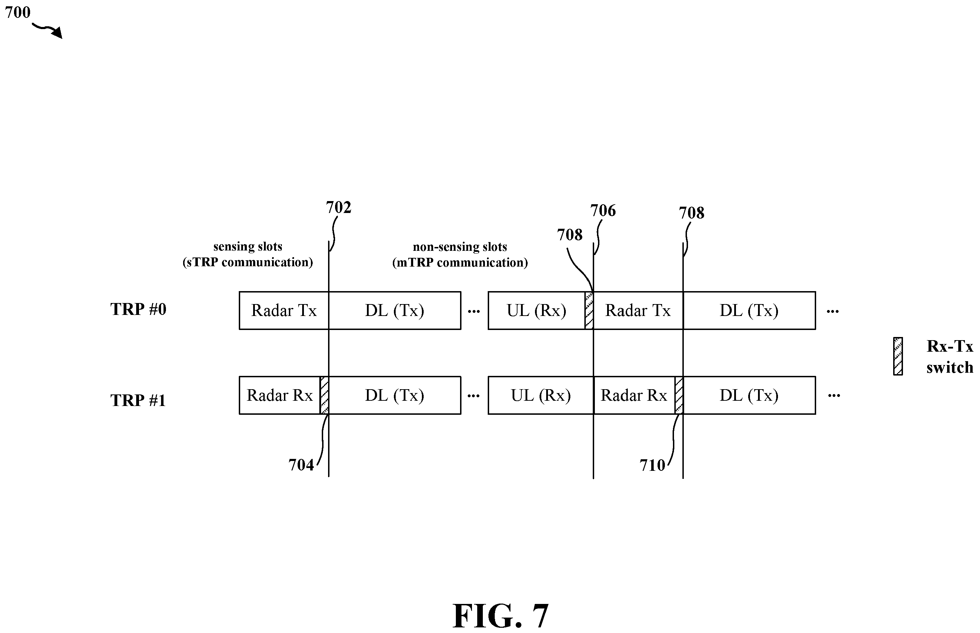

FIG. 7 is an example diagram 700 illustrating one or more RX-TX switches according to one or more aspects. As shown in FIG. 7, immediately before a first boundary 702 between a sensing slot and a non-sensing slot, the TRP #1, which operates as the RX node for radar sensing, may perform an RX-TX switch 704. Similarly, immediately before a second boundary 706 between a non-sensing slot and a sensing slot, the TRP #0, which operates as the TX node for radar sensing, may perform an RX-TX switch 708. Moreover, immediately before a third boundary between a sensing slot and a non-sensing slot (e.g., a boundary at RX-TX switch 708), the TRP #0 may perform another RX-TX switch 710.

Moreover, phase continuity over time may be desired for performing Doppler-related estimation. A consecutive sensing duration may also be desired for this reason. For example, it may take several ms to tens of ms to perform a Doppler estimation of a micro-Doppler signature associated with propellers of a UAV target in order to identify the UAV target. A consecutive sensing duration that may ensure phase continuity over a sufficiently long period may be helpful to the performance of the Doppler estimation.

In some configurations, for semi-statically configured radar sensing (e.g., for target UAV detection), optimization may be performed for the sTRP-mTRP slot pattern associated with periodic consecutive sensing slots (occasions), where sTRP communication may be performed in the same sensing slots. In some additional configurations, for dynamically (on-demand) triggered radar sensing (e.g., for UAV tracking after a UAV is detected), the behavior of the system may be defined where the same slots are already scheduled for mTRP communication (sensing and mTRP communication may not be performed in a same slot). In one or more configurations, the mTRP communication may also be either dynamically scheduled (e.g., scheduled based on a DCI message or a MAC- control element (CE) (MAC-CE)) or semi-statically configured (e.g., configured based on an RRC message).

In some aspects, the radar sensing may be configured semi-statically and the mTRP communication may be scheduled dynamically. In one or more configurations, for dynamically scheduled mTRP communication, the base station may avoid scheduling mTRP communication (e.g., PDSCH, PUSCH, or PUCCH communication) in sensing slots. However, for multi-slot TDMed mTRP transmission (i.e., repeated transmissions associated with different TRPs across multiple slots), avoiding scheduling the mTRP communication in sensing slots may limit scheduling flexibility because each multi-slot mTRP transmission may be confined within non-sensing slots.

In one or more configurations, for multi-slot TDMed communication (e.g., PDSCH, PUSCH, or PUCCH communication) associated with two TRPs, where each TRP is associated with a respective transmission configuration indicator (TCI) state (for a total of two TCI states), the repetition(s) may extend into sensing slots. However, within the sensing slot, just one TCI (i.e., one TRP) and not both TCI states may be used. In particular, in one configuration, the TCI state used in the sensing slots may be explicitly selected by the base station from a set of preconfigured TCI states for sensing slots. In another configuration, the TCI state used in the sensing slots may be implicitly determined (i.e., without explicit communication) from the two TCI states based on a preconfiguration (e.g., a first TCI state may always be used for sTRP communication in sensing slots). Further, in the non-sensing slots, the TDMed communication may be mTRP communication that may make use of both TRPs.

In one or more configurations, for more balanced use of the two TRPs over the repetitions, the TCI state used for each slot may be selected based on a half-half pattern across the multi-slot TDMed communication. In particular, selecting the TCI state for each slot based on the half-half pattern across the whole multi-slot TDMed communication may help to keep the use of the two TRPs balanced when the multi-slot TDMed communication is scheduled across the boundary between sensing and non-sensing slots.

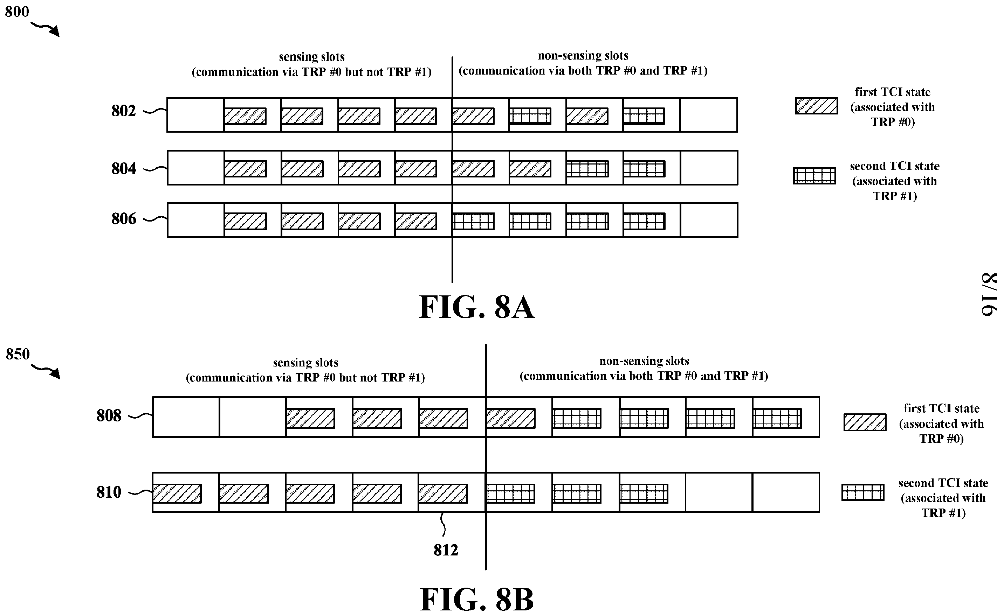

FIG. 8A is an example diagram 800 illustrating TCI state selection for a multi-slot TDMed communication scheduled across the boundary between sensing and non-sensing slots according to one or more aspects. The example multi-slot TDMed communication may occupy 8 slots in total. The diagram 802 illustrates the TCI state selection based on a cyclic mapping pattern and not based on the half-half pattern. Because just one TCI state may be used in the sensing slots, the cyclic mapping pattern may not be used in the sensing slots. Rather, within the sensing slots, the first TCI state is used for all four sensing slots that also contain wireless communication. Further, within the non-sensing slots, the cyclic mapping pattern may be used: For the four non-sensing slots that contain mTRP wireless communication, the TCI states may be selected based on the cyclic mapping pattern: the first TCI state (TRP #0), the second TCI state (TRP #1), the first TCI state (TRP #0), the second TCI state (TRP #1), the first TCI state (TRP #0), the second TCI state (TRP #1), the first TCI state (TRP #0), the second TCI state (TRP #1), and so on. As shown in the diagram 802, across the eight slots associated with the multi-slot TDMed communication across the boundary between sensing and non-sensing slots, the TRP #0 may be used in 6 slots and the TRP #1 may be used in just 2 slots. In other words, the use of the two TRPs may be unbalanced.

Further, the diagram 804 illustrates the TCI state selection based on a sequential mapping pattern and not based on the half-half pattern. Similar to the scenario of the diagram 802, because just one TCI state may be used in the sensing slots, the cyclic mapping pattern may not be used in the sensing slots. Rather, within the sensing slots, the first TCI state is used for all four sensing slots that also contain wireless communication. Further, within the non-sensing slots, the sequential mapping pattern may be used: For the four non-sensing slots that contain mTRP wireless communication, the TCI states may be selected based on the sequential mapping pattern: the first TCI state (TRP #0), the first TCI state (TRP #0), the second TCI state (TRP #1), the second TCI state (TRP #1), the first TCI state (TRP #0), the first TCI state (TRP #0), the second TCI state (TRP #1), the second TCI state (TRP #1), and so on. As shown in the diagram 804, across the eight slots associated with the multi-slot TDMed communication across the boundary between sensing and non-sensing slots, the TRP #0 may be used in 6 slots and the TRP #1 may be used in just 2 slots. In other words, the use of the two TRPs may be unbalanced.

In contrast, the diagram 806 illustrates the TCI state selection based on the half-half pattern. Within the sensing slots, the first TCI state is used for all four sensing slots that also contain wireless communication. Then, the half-half pattern may be considered taking all slots of the multi-slot TDMed communication into consideration. Because the first TCI state is already used for four sensing slots, for the non-sensing slots, the second TCI state may be used for four non-sensing slots. Therefore, as shown in the diagram 806, across the eight slots associated with the multi-slot TDMed communication across the boundary between sensing and non-sensing slots, the TRP #0 may be used in 4 slots and the TRP #1 may be used in 4 slots. In other words, the use of the two TRPs may be balanced when the half-half pattern is used.

FIG. 8B is an example diagram 850 illustrating TCI state selection for a multi-slot TDMed communication scheduled across the boundary between sensing and non-sensing slots based on the half-half pattern according to one or more aspects. In the diagram 808, the first TCI state may be used in 4 slots including 3 sensing slots and 1 non-sensing slots. Moreover, the second TCI state may also be used in 4 slots consisting entirely of non-sensing slots. Therefore, the use of the two TRPs may be balanced when the half-half pattern is used.

Further, in the diagram 810, 5 slots of the 8-slot TDMed communication may be located within the sensing slots and 3 remaining slots may be located within non-sensing slots. Based on a pure half-half pattern, the two TCI states may each be used for 4 slots. However, because just one TCI state may be used in the sensing slots, the first TCI state may be used for the 5 sensing slots and the second TCI state may be used for the remaining 3 slots in the non-sensing slots. In other words, the sensing slot configuration may override at the slot 812 the TCI state selection that would be used based on the pure half-half pattern: Based on the pure half-half pattern, the second TCI state may be used for the slot 812; however, the sensing slot configuration may override that would-be TCI state selection and may cause the first TCI state to be used instead for the slot 812.

In some aspects, the radar sensing may be configured semi-statically and the mTRP communication may be scheduled semi-statically as well. For the periodic or semi-persistent (SPS) communication, the conflict at one or more slots between the scheduled or configured mTRP communication and the scheduled or configured sensing (sTRP communication) may be resolved in various ways.

In one or more configurations, the base station may avoid configuring mTRP communication at sensing slots. Further, the UE may not expect a conflict between the scheduled or configured mTRP communication and the scheduled or configured sensing (sTRP communication).

In one or more configurations, the base station may separately configure the sensing and the periodic or SPS mTRP communication. When a conflict between the scheduled or configured mTRP communication and the scheduled or configured sensing (sTRP communication) arises at one or more slots, the scheduled or configured sensing (sTRP communication) may take precedence, and may override the scheduled or configured mTRP communication. Accordingly, the UE may recognize that the slot where a conflict exists may actually be a sensing slot.

In one configuration, the TCI state used in the sensing slots may be explicitly selected by the base station from a set of preconfigured TCI states for sensing slots. In another configuration, the TCI state used in the sensing slots may be implicitly determined (i.e., without explicit communication) from the two TCI states based on a preconfiguration (e.g., a first TCI state may always be used for sTRP communication in sensing slots).

In one or more configurations, the configured periodic or SPS mTRP communication may include one or more of PDCCH monitoring (e.g., two PDCCH candidates that appear as repetitions may be linked, where each of the two PDCCH candidates may be from a respective one of the two TRPs and may be associated with a respective one of the two corresponding TCI states), one or more periodic or SPS PUSCHs, or one or more periodic or SPS PUCCHs.

In one or more configurations, for PDCCH monitoring in sensing slots, the CORESET(s) associated with the TCI states not used for or relevant to the sensing slots may be deactivated (A deactivated CORESET may not be monitored by the UE).

In some aspects, the radar sensing may be configured dynamically and the mTRP communication may be scheduled dynamically as well. In one or more configurations, when a conflict between the dynamically scheduled or configured TDMed mTRP communication and the dynamically scheduled or configured sensing (sTRP communication) arises at one or more slots, the dynamically scheduled or configured sensing (sTRP communication) may take precedence, and may override the dynamically scheduled or configured TDMed mTRP communication. Accordingly, the UE may recognize that the slot where a conflict exists may actually be a sensing slot.

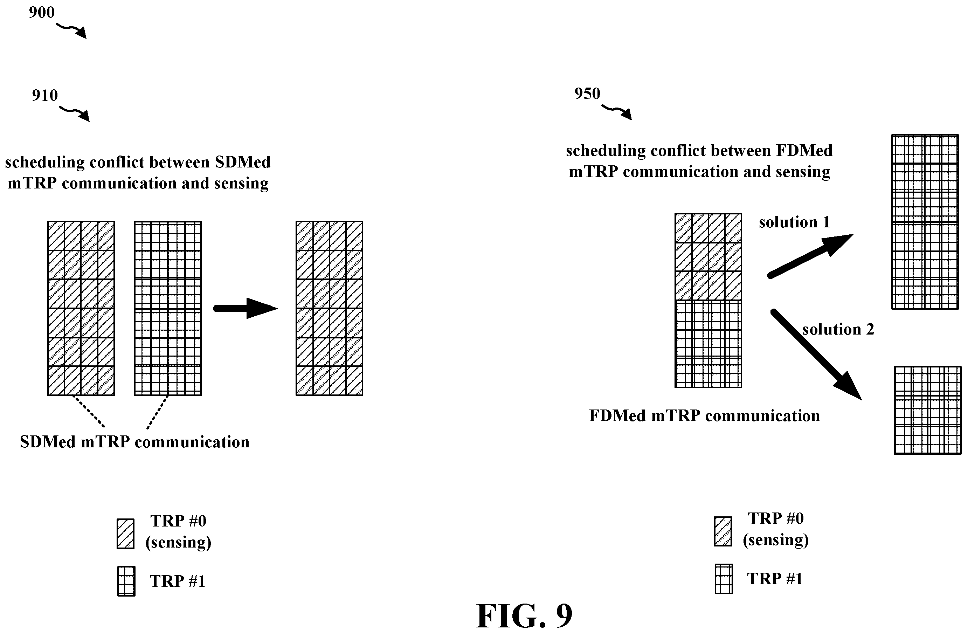

FIG. 9 is an example diagram 900 illustrating resolution of a conflict between dynamically scheduled mTRP communication and dynamically scheduled radar sensing according to one or more aspects. In particular, the diagram 910 illustrates resolution of a conflict between dynamically scheduled SDMed mTRP communication and dynamically scheduled radar sensing. In one or more configurations, when a conflict between the dynamically scheduled or configured SDMed mTRP communication and the dynamically scheduled or configured sensing (sTRP communication) arises at one or more slots, the dynamically scheduled or configured sensing (sTRP communication) may take precedence, and may override the dynamically scheduled or configured SDMed mTRP communication. Accordingly, the UE may recognize that the slot where a conflict exists may actually be a sensing slot. In particular, at sensing slots, the UE may assume the transmission power associated with the DM-RS ports and data layer(s) associated with the unused TCI state to be zero.

The diagram 950 illustrates resolution of a conflict between dynamically scheduled FDMed mTRP communication and dynamically scheduled radar sensing. In one or more configurations, when a conflict between the dynamically scheduled or configured FDMed mTRP communication and the dynamically scheduled or configured sensing (sTRP communication) arises at one or more slots, the dynamically scheduled or configured sensing (sTRP communication) may take precedence, and may override the dynamically scheduled or configured FDMed mTRP communication. Accordingly, the UE may recognize that the slot where a conflict exists may actually be a sensing slot. In particular, in one configuration, at sensing slots, the sTRP communication may use all the RBs allocated (e.g., to the UE) (e.g., RBs associated with both the TRP #0 and the TRP #1 in the FDMed mTRP communication). In one configuration, at sensing slots, the sTRP communication may use one half of all the RBs allocated (e.g., to the UE) (e.g., RBs associated with just the TRP #1 in the FDMed mTRP communication).

In one or more configurations, the processing timeline may be satisfied between the dynamic sensing indication or configuration and any PDSCH transmission; otherwise, the UE may still assume that the PDSCH is based on the scheduled mTRP transmission and accordingly errors may arise in the reception of the PDSCH.

In some aspects, the radar sensing may be configured dynamically and the mTRP communication may be scheduled semi-statically. The semi-statically scheduled mTRP communication may include one or more of PDCCH monitoring, a periodic or SPS PUSCH, or a periodic or SPS PUCCH. In one or more configurations, when a conflict between the mTRP communication that may include PDCCH monitoring and the dynamically scheduled or configured sensing (sTRP communication) arises at one or more slots, the dynamically scheduled or configured sensing (sTRP communication) may take precedence, and may override the semi-statically scheduled PDCCH monitoring.

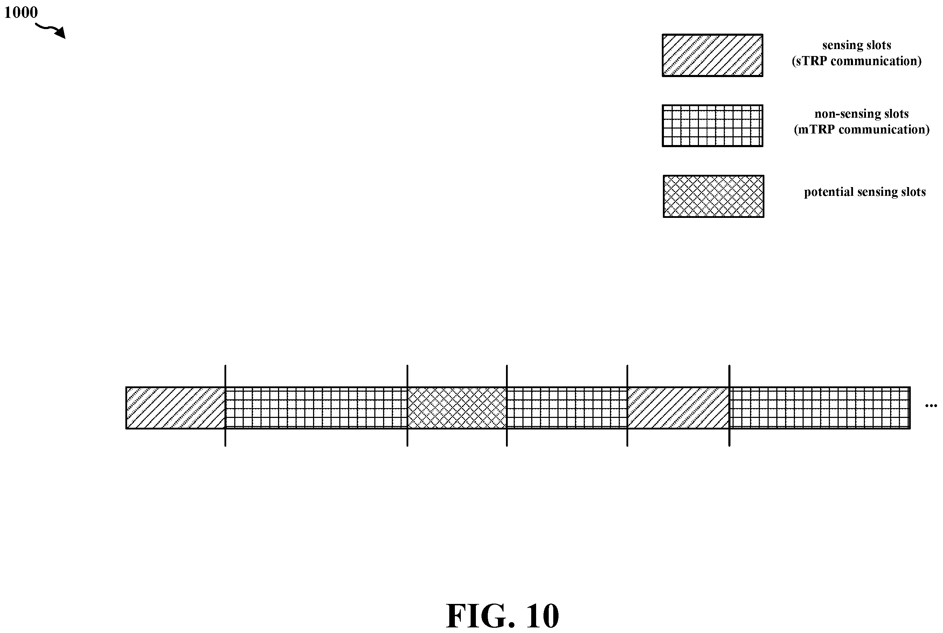

FIG. 10 is an example diagram 1000 illustrating a potential sensing slot configured by a base station according to one or more aspects. In one or more configurations, the base station may preconfigure some slots as potential sensing slots. Accordingly, as shown in FIG. 10, the scheduled slots may include one or more sensing slots, one or more non-sensing slots, and one or more potential sensing slots.

In one configuration, if the semi-statically configured mTRP transmission at a potential sensing slot includes PDCCH monitoring, the UE may still monitor the linked pair of repeated PDCCH candidates in the same way the UE may monitor the linked pair of PDCCH candidates in non-sensing slots. However, one PDCCH candidate in the linked pair of candidates (e.g., the one PDCCH candidate associated with the TRP #0 in the (potential) sensing slot) may also be monitored by the UE as an individual PDCCH candidate. The configuration may be based on a probability of dynamic sensing being triggered, which, for example, may be estimated by the base station. In particular, the probability of dynamic sensing being triggered may be based on a UAV flight plan, a UAV current location, or whether an intruder UAV is detected nearby.

In different configurations, either the individual PDCCH candidate or the linked candidate pair repetition may be configured as a prioritized PDCCH candidate that may be prioritized over the other one.

In one or more configurations, for an mTRP periodic or SPS PUSCH or PUCCH in a potential sensing slot, the base station may transmit the periodic or SPS PUSCH or PUCCH with both TCI states (e.g., the potential sensing slot is treated similar to a non-sensing slot), or with just one TCI state (e.g., the potential sensing slot is treated similar to a sensing slot). The configuration may be based on a probability of dynamic sensing being triggered, which, for example, may be estimated by the base station. In particular, the probability of dynamic sensing being triggered may be based on a UAV flight plan, a UAV current location, or whether an intruder UAV is detected nearby. For example, if the probability of dynamic sensing being triggered is estimated as being high, the potential sensing slot may be treated similar to a sensing slot. Conversely, if the probability of dynamic sensing being triggered is estimated as being low, the potential sensing slot may be treated similar to a non-sensing slot.

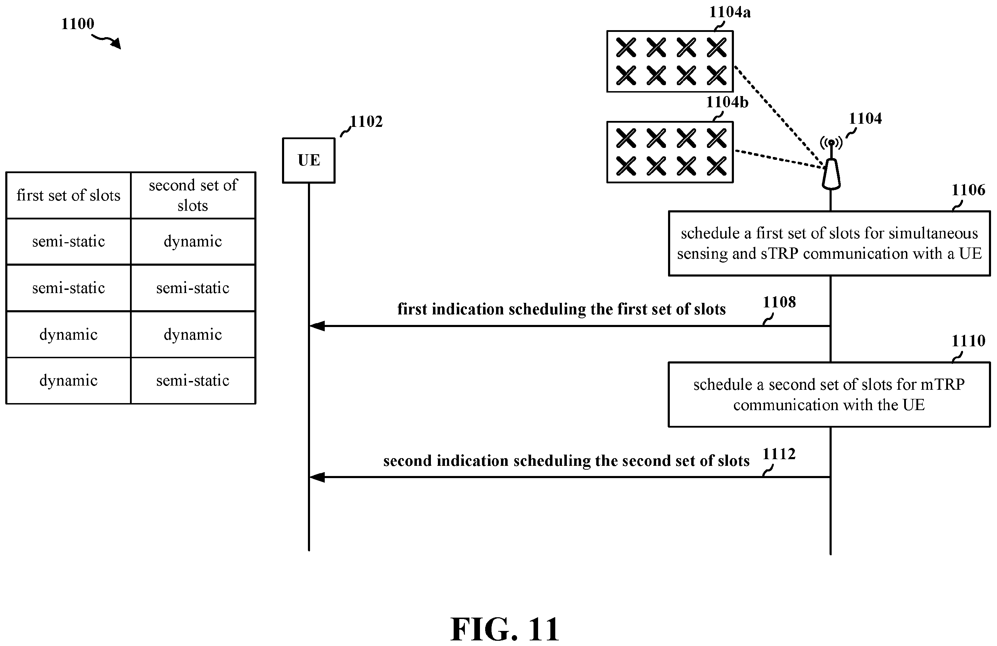

FIG. 11 is a flow diagram 1100 of a method of wireless communication. The network node 1104 may be associated with a first TRP 1104a and a second TRP 1104b. At 1106, the network node 1104 may schedule a first set of slots for simultaneous sensing and sTRP communication (i.e., sensing and sTRP communication at the same time, not TDMed) with a UE 1102.

At 1108, the network node 1104 may transmit, to the UE 1102, and the UE 1102 may receive, from the network node 1104, a first indication scheduling a first set of slots for simultaneous sensing and sTRP communication.

At 1110, the network node 1104 may schedule a second set of slots for mTRP communication with the UE 1102. The first set of slots and the second set of slots may include at least one same slot.

At 1112, the network node 1104 may transmit, to the UE 1102, and the UE 1102 may receive, from the network node 1104, a second indication scheduling a second set of slots for mTRP communication.

In one configuration, the first set of slots may be scheduled semi-statically. The second set of slots may be scheduled dynamically. The mTRP communication may be TDMed. The sTRP communication with the UE may be associated with a single TRP between the first TRP 1104a and the second TRP 1104b.

In one configuration, the first TRP 1104a and the second TRP 1104b may be associated with an equal number of slots across the first set of slots and the second set of slots in relation to the sTRP communication or the mTRP communication.

In one configuration, the first set of slots may be scheduled semi-statically. The second set of slots may be scheduled semi-statically. The at least one same slot may be omitted from the second set of slots. For example, the at least one same slot may be treated as just a slot in the first set of slots, and may be recognized as a slot for simultaneous sensing and sTRP communication.

In one configuration, the first set of slots may be associated with a preconfigured TCI state.

In one configuration, the mTRP communication may be associated with one or more of PDCCH monitoring, a periodic or SPS PUSCH, or a periodic or SPS PUCCH.

In one configuration, the first set of slots may be scheduled dynamically. The second set of slots may be scheduled dynamically. The at least one same slot may be omitted from the second set of slots.

In one configuration, the mTRP communication may be SDMed. The mTRP communication may be associated with at least one PDSCH.

In one configuration, the mTRP communication may be FDMed. The mTRP communication may be associated with at least one PDSCH.

In one configuration, the sTRP communication may be associated with all allocated RBs for communication with the UE.

In one configuration, the sTRP communication may be associated with one half of all allocated RBs for communication with the UE.

In one configuration, the first set of slots may be scheduled dynamically. The second set of slots may be scheduled semi-statically. The mTRP communication may be associated with one or more of PDCCH monitoring, a periodic or SPS PUSCH, or a periodic or SPS PUCCH.

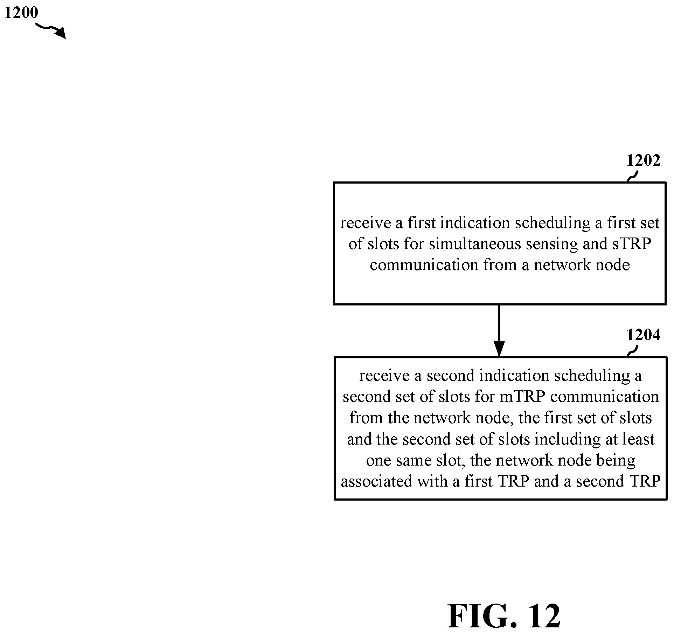

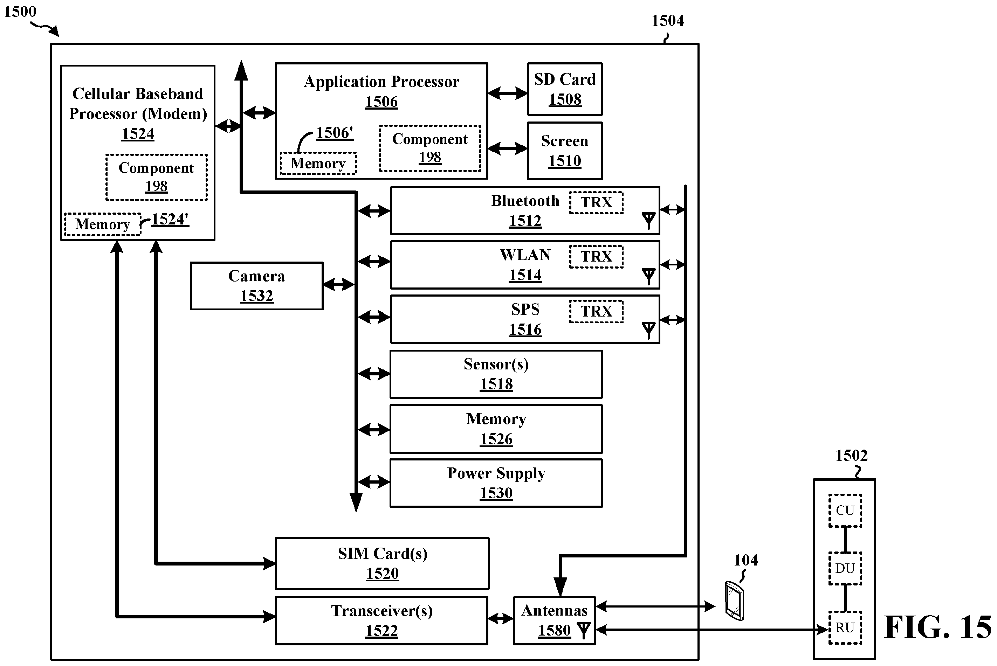

FIG. 12 is a flowchart 1200 of a method of wireless communication. The method may be performed by a UE (e.g., the UE 104/350/1102; the apparatus 1504). At 1202, the UE may receive a first indication scheduling a first set of slots for simultaneous sensing and sTRP communication from a network node. For example, 1202 may be performed by the component 198 in FIG. 15. Referring to FIG. 11, at 1108, the UE 1102 may receive a first indication scheduling a first set of slots for simultaneous sensing and sTRP communication from a network node 1104.

At 1204, the UE may receive a second indication scheduling a second set of slots for mTRP communication from the network node. The first set of slots and the second set of slots may include at least one same slot. The network node may be associated with a first TRP and a second TRP. For example, 1204 may be performed by the component 198 in FIG. 15. Referring to FIG. 11, at 1112, the UE 1102 may receive a second indication scheduling a second set of slots for mTRP communication from the network node 1104.

In one configuration, referring to FIG. 11, the first set of slots may be scheduled semi-statically. The second set of slots may be scheduled dynamically. The mTRP communication may be TDMed. The sTRP communication with the UE may be associated with a single TRP between the first TRP 1104a and the second TRP 1104b.

In one configuration, referring to FIG. 11, the first TRP 1104a and the second TRP 1104b may be associated with an equal number of slots across the first set of slots and the second set of slots in relation to the sTRP communication or the mTRP communication.

In one configuration, the first set of slots may be scheduled semi-statically. The second set of slots may be scheduled semi-statically. The at least one same slot may be omitted from the second set of slots.

In one configuration, the first set of slots may be associated with a preconfigured TCI state.

In one configuration, the mTRP communication may be associated with one or more of PDCCH monitoring, a periodic or SPS PUSCH, or a periodic or SPS PUCCH.

In one configuration, the first set of slots may be scheduled dynamically. The second set of slots may be scheduled dynamically. The at least one same slot may be omitted from the second set of slots.

In one configuration, the mTRP communication may be SDMed. The mTRP communication may be associated with at least one PDSCH.

In one configuration, the mTRP communication may be FDMed. The mTRP communication may be associated with at least one PDSCH.

In one configuration, the sTRP communication may be associated with all allocated RBs for communication with the UE.

In one configuration, the sTRP communication may be associated with one half of all allocated RBs for communication with the UE.

In one configuration, the first set of slots may be scheduled dynamically. The second set of slots may be scheduled semi-statically. The mTRP communication may be associated with one or more of PDCCH monitoring, a periodic or SPS PUSCH, or a periodic or SPS PUCCH.

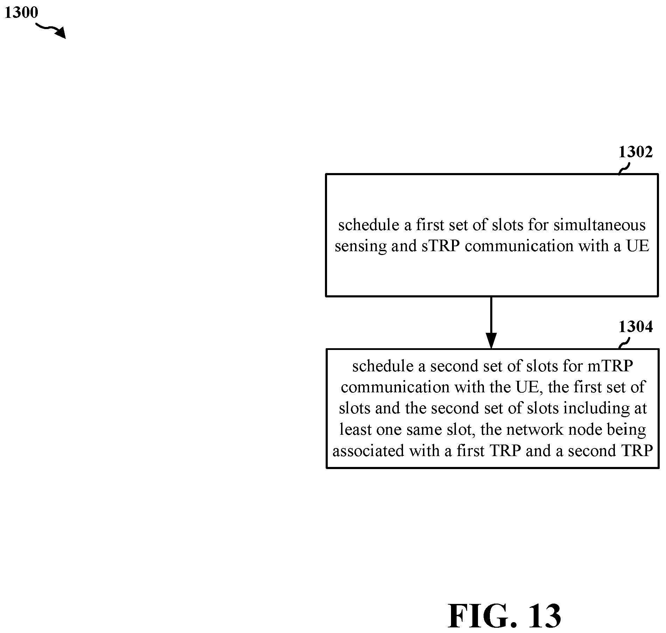

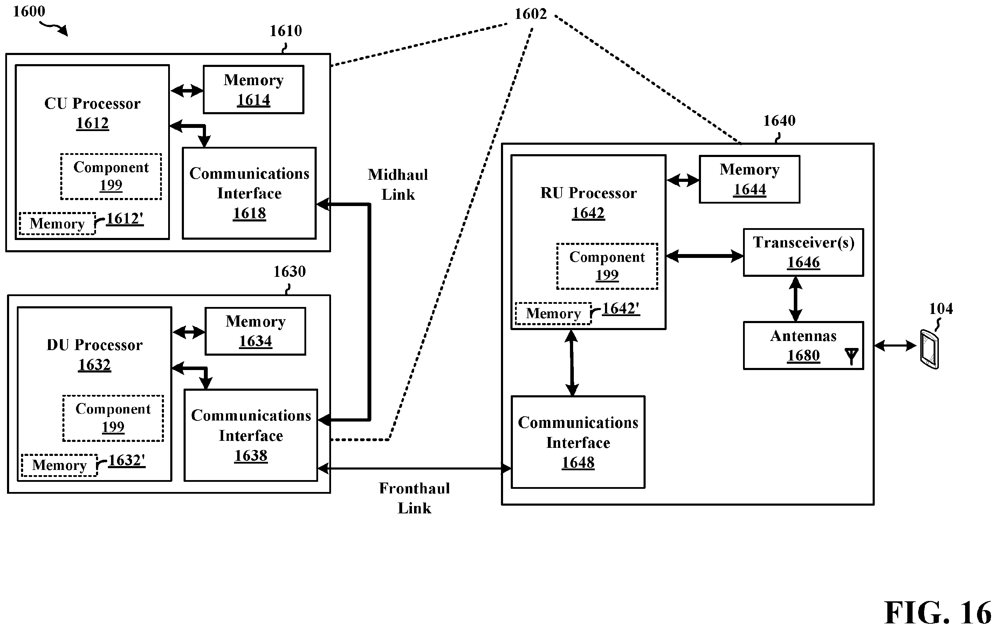

FIG. 13 is a flowchart 1300 of a method of wireless communication. The method may be performed by a base station/network node (e.g., the base station 102/310/1104; the network entity 1502). At 1302, the network node may schedule a first set of slots for simultaneous sensing and sTRP communication with a UE. For example, 1302 may be performed by the component 199 in FIG. 16. Referring to FIG. 11, at 1106, the network node 1104 may schedule a first set of slots for simultaneous sensing and sTRP communication with a UE 1102.

At 1304, the network node may schedule a second set of slots for mTRP communication with the UE. The first set of slots and the second set of slots may include at least one same slot. The network node may be associated with a first TRP and a second TRP. For example, 1304 may be performed by the component 199 in FIG. 16. Referring to FIG. 11, at 1110, the network node 1104 may schedule a second set of slots for mTRP communication with the UE 1102.

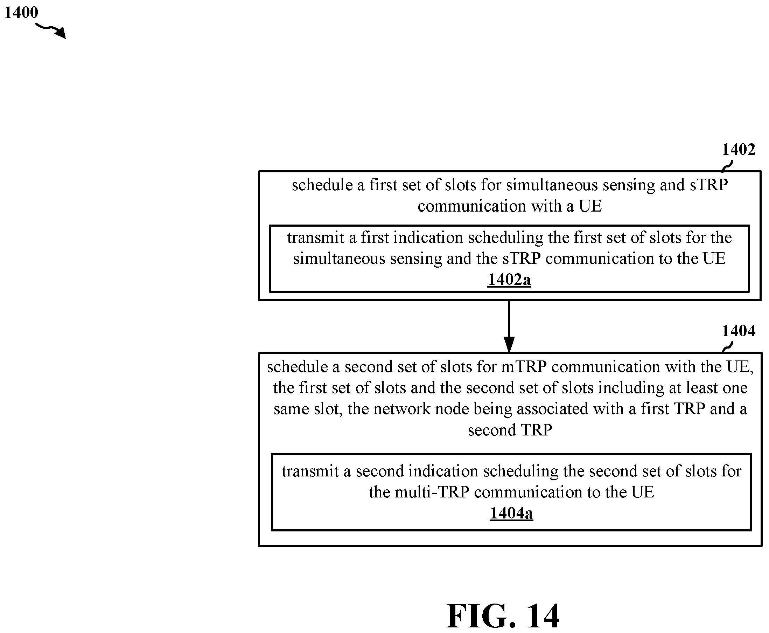

FIG. 14 is a flowchart 1400 of a method of wireless communication. The method may be performed by a base station/network node (e.g., the base station 102/310/1104; the network entity 1502). At 1402, the network node may schedule a first set of slots for simultaneous sensing and sTRP communication with a UE. For example, 1402 may be performed by the component 199 in FIG. 16. Referring to FIG. 11, at 1106, the network node 1104 may schedule a first set of slots for simultaneous sensing and sTRP communication with a UE 1102.

At 1404, the network node may schedule a second set of slots for mTRP communication with the UE. The first set of slots and the second set of slots may include at least one same slot. The network node may be associated with a first TRP and a second TRP. For example, 1404 may be performed by the component 199 in FIG. 16. Referring to FIG. 11, at 1110, the network node 1104 may schedule a second set of slots for mTRP communication with the UE 1102.

In one configuration, referring to FIG. 11, the first set of slots may be scheduled semi-statically. The second set of slots may be scheduled dynamically. The mTRP communication may be TDMed. The sTRP communication with the UE may be associated with a single TRP between the first TRP 1104a and the second TRP 1104b.

In one configuration, referring to FIG. 11, the first TRP 1104a and the second TRP 1104b may be associated with an equal number of slots across the first set of slots and the second set of slots in relation to the sTRP communication or the mTRP communication.

In one configuration, the first set of slots may be scheduled semi-statically. The second set of slots may be scheduled semi-statically. The at least one same slot may be omitted from the second set of slots.

In one configuration, the first set of slots may be associated with a preconfigured TCI state.

In one configuration, the mTRP communication may be associated with one or more of PDCCH monitoring, a periodic or SPS PUSCH, or a periodic or SPS PUCCH.

In one configuration, the first set of slots may be scheduled dynamically. The second set of slots may be scheduled dynamically. The at least one same slot may be omitted from the second set of slots.

In one configuration, the mTRP communication may be SDMed. The mTRP communication may be associated with at least one PDSCH.

In one configuration, the mTRP communication may be FDMed. The mTRP communication may be associated with at least one PDSCH.

In one configuration, the sTRP communication may be associated with all allocated RBs for communication with the UE.

In one configuration, the sTRP communication may be associated with one half of all allocated RBs for communication with the UE.

In one configuration, the first set of slots may be scheduled dynamically. The second set of slots may be scheduled semi-statically. The mTRP communication may be associated with one or more of PDCCH monitoring, a periodic or SPS PUSCH, or a periodic or SPS PUCCH.

In one configuration, to schedule the first set of slots for simultaneous sensing and sTRP communication, at 1402a, the network node may transmit a first indication scheduling the first set of slots for the simultaneous sensing and the sTRP communication to the UE. For example, 1402a may be performed by the component 199 in FIG. 16. Referring to FIG. 11, at 1108, the network node 1104 may transmit a first indication scheduling the first set of slots for the simultaneous sensing and the sTRP communication to the UE 1102.

To schedule the second set of slots for multi-TRP communication with the UE, at 1404a, the network node may transmit a second indication scheduling the second set of slots for the multi-TRP communication to the UE. For example, 1404a may be performed by the component 199 in FIG. 16. Referring to FIG. 11, at 1112, the network node 1104 may transmit a second indication scheduling the second set of slots for the multi-TRP communication to the UE 1102.

FIG. 15 is a diagram 1500 illustrating an example of a hardware implementation for an apparatus 1504. The apparatus 1504 may be a UE, a component of a UE, or may implement UE functionality. In some aspects, the apparatus1504 may include a cellular baseband processor 1524 (also referred to as a modem) coupled to one or more transceivers 1522 (e.g., cellular RF transceiver). The cellular baseband processor 1524 may include on-chip memory 1524'. In some aspects, the apparatus 1504 may further include one or more subscriber identity modules (SIM) cards 1520 and an application processor 1506 coupled to a secure digital (SD) card 1508 and a screen 1510. The application processor 1506 may include on-chip memory 1506'. In some aspects, the apparatus 1504 may further include a Bluetooth module 1512, a WLAN module 1514, an SPS module 1516 (e.g., GNSS module), one or more sensor modules 1518 (e.g., barometric pressure sensor / altimeter; motion sensor such as inertial management unit (IMU), gyroscope, and/or accelerometer(s); light detection and ranging (LIDAR), radio assisted detection and ranging (RADAR), sound navigation and ranging (SONAR), magnetometer, audio and/or other technologies used for positioning), additional memory modules 1526, a power supply 1530, and/or a camera 1532. The Bluetooth module 1512, the WLAN module 1514, and the SPS module 1516 may include an on-chip transceiver (TRX) (or in some cases, just a receiver (RX)). The Bluetooth module 1512, the WLAN module 1514, and the SPS module 1516 may include their own dedicated antennas and/or utilize the antennas 1580 for communication. The cellular baseband processor 1524 communicates through the transceiver(s) 1522 via one or more antennas 1580 with the UE 104 and/or with an RU associated with a network entity 1502. The cellular baseband processor 1524 and the application processor 1506 may each include a computer-readable medium / memory 1524', 1506', respectively. The additional memory modules 1526 may also be considered a computer-readable medium / memory. Each computer-readable medium / memory 1524', 1506', 1526 may be non-transitory. The cellular baseband processor 1524 and the application processor 1506 are each responsible for general processing, including the execution of software stored on the computer-readable medium / memory. The software, when executed by the cellular baseband processor 1524 / application processor 1506, causes the cellular baseband processor 1524 / application processor 1506 to perform the various functions described *supra.* The computer-readable medium / memory may also be used for storing data that is manipulated by the cellular baseband processor 1524 / application processor 1506 when executing software. The cellular baseband processor 1524 / application processor 1506 may be a component of the UE 350 and may include the memory 360 and/or at least one of the TX processor 368, the RX processor 356, and the controller/processor 359. In one configuration, the apparatus 1504 may be a processor chip (modem and/or application) and include just the cellular baseband processor 1524 and/or the application processor 1506, and in another configuration, the apparatus 1504 may be the entire UE (e.g., see 350 of FIG. 3) and include the additional modules of the apparatus 1504.

As discussed *supra,* the component 198 is configured to receive a first indication scheduling a first set of slots for simultaneous sensing and sTRP communication from a network node. The component 198 may be configured to receive a second indication scheduling a second set of slots for mTRP communication from the network node. The first set of slots and the second set of slots may include at least one same slot. The network node may be associated with a first TRP and a second TRP. The component 198 may be within the cellular baseband processor 1524, the application processor 1506, or both the cellular baseband processor 1524 and the application processor 1506. The component 198 may be one or more hardware components specifically configured to carry out the stated processes/algorithm, implemented by one or more processors configured to perform the stated processes/algorithm, stored within a computer-readable medium for implementation by one or more processors, or some combination thereof. As shown, the apparatus 1504 may include a variety of components configured for various functions. In one configuration, the apparatus 1504, and in particular the cellular baseband processor 1524 and/or the application processor 1506, includes means for receiving a first indication scheduling a first set of slots for simultaneous sensing and sTRP communication from a network node. The apparatus 1504, and in particular the cellular baseband processor 1524 and/or the application processor 1506, includes means for receiving a second indication scheduling a second set of slots for mTRP communication from the network node. The first set of slots and the second set of slots may include at least one same slot. The network node may be associated with a first TRP and a second TRP.

In one configuration, the first set of slots may be scheduled semi-statically. The second set of slots may be scheduled dynamically. The mTRP communication may be TDMed. The sTRP communication with the UE may be associated with a single TRP between the first TRP and the second TRP. In one configuration, the first TRP and the second TRP may be associated with an equal number of slots across the first set of slots and the second set of slots in relation to the sTRP communication or the mTRP communication. In one configuration, the first set of slots may be scheduled semi-statically. The second set of slots may be scheduled semi-statically. The at least one same slot may be omitted from the second set of slots. In one configuration, the first set of slots may be associated with a preconfigured TCI state. In one configuration, the mTRP communication may be associated with one or more of PDCCH monitoring, a periodic or SPS PUSCH, or a periodic or SPS PUCCH. In one configuration, the first set of slots may be scheduled dynamically. The second set of slots may be scheduled dynamically. The at least one same slot may be omitted from the second set of slots. In one configuration, the mTRP communication may be SDMed. The mTRP communication may be associated with at least one PDSCH. In one configuration, the mTRP communication may be FDMed. The mTRP communication may be associated with at least one PDSCH. In one configuration, the sTRP communication may be associated with all allocated RBs for communication with the UE. In one configuration, the sTRP communication may be associated with one half of all allocated RBs for communication with the UE. In one configuration, the first set of slots may be scheduled dynamically. The second set of slots may be scheduled semi-statically. The mTRP communication may be associated with one or more of PDCCH monitoring, a periodic or SPS PUSCH, or a periodic or SPS PUCCH.

The means may be the component 198 of the apparatus 1504 configured to perform the functions recited by the means. As described *supra,* the apparatus 1504 may include the TX processor 368, the RX processor 356, and the controller/processor 359. As such, in one configuration, the means may be the TX processor 368, the RX processor 356, and/or the controller/processor 359 configured to perform the functions recited by the means.

FIG. 16 is a diagram 1600 illustrating an example of a hardware implementation for a network entity 1602. The network entity 1602 may be a BS, a component of a BS, or may implement BS functionality. The network entity 1602 may include at least one of a CU 1610, a DU 1630, or an RU 1640. For example, depending on the layer functionality handled by the component 199, the network entity 1602 may include the CU 1610; both the CU 1610 and the DU 1630; each of the CU 1610, the DU 1630, and the RU 1640; the DU 1630; both the DU 1630 and the RU 1640; or the RU 1640. The CU 1610 may include a CU processor 1612. The CU processor 1612 may include on-chip memory 1612'. In some aspects, the CU 1610 may further include additional memory modules 1614 and a communications interface 1618. The CU 1610 communicates with the DU 1630 through a midhaul link, such as an F1 interface. The DU 1630 may include a DU processor 1632. The DU processor 1632 may include on-chip memory 1632'. In some aspects, the DU 1630 may further include additional memory modules 1634 and a communications interface 1638. The DU 1630 communicates with the RU 1640 through a fronthaul link. The RU 1640 may include an RU processor 1642. The RU processor 1642 may include on-chip memory 1642'. In some aspects, the RU 1640 may further include additional memory modules 1644, one or more transceivers 1646, antennas 1680, and a communications interface 1648. The RU 1640 communicates with the UE 104. The on-chip memory 1612', 1632', 1642' and the additional memory modules 1614, 1634, 1644 may each be considered a computer-readable medium / memory. Each computer-readable medium / memory may be non-transitory. Each of the processors 1612, 1632, 1642 is responsible for general processing, including the execution of software stored on the computer-readable medium / memory. The software, when executed by the corresponding processor(s) causes the processor(s) to perform the various functions described *supra.* The computer-readable medium / memory may also be used for storing data that is manipulated by the processor(s) when executing software.

As discussed *supra,* the component 199 is configured to schedule a first set of slots for simultaneous sensing and sTRP communication with a UE. The component 199 is configured to schedule a second set of slots for mTRP communication with the UE. The first set of slots and the second set of slots may include at least one same slot. The network node may be associated with a first TRP and a second TRP. The component 199 may be within one or more processors of one or more of the CU 1610, DU 1630, and the RU 1640. The component 199 may be one or more hardware components specifically configured to carry out the stated processes/algorithm, implemented by one or more processors configured to perform the stated processes/algorithm, stored within a computer-readable medium for implementation by one or more processors, or some combination thereof. The network entity 1602 may include a variety of components configured for various functions. In one configuration, the network entity 1602 includes means for scheduling a first set of slots for simultaneous sensing and sTRP communication with a UE. The network entity 1602 includes means scheduling a second set of slots for mTRP communication with the UE. The first set of slots and the second set of slots may include at least one same slot. The network node may be associated with a first TRP and a second TRP.

In one configuration, the first set of slots may be scheduled semi-statically. The second set of slots may be scheduled dynamically. The mTRP communication may be TDMed. The sTRP communication with the UE may be associated with a single TRP between the first TRP and the second TRP. In one configuration, the first TRP and the second TRP may be associated with an equal number of slots across the first set of slots and the second set of slots in relation to the sTRP communication or the mTRP communication. In one configuration, the first set of slots may be scheduled semi-statically. The second set of slots may be scheduled semi-statically. The at least one same slot may be omitted from the second set of slots. In one configuration, the first set of slots may be associated with a preconfigured TCI state. In one configuration, the mTRP communication may be associated with one or more of PDCCH monitoring, a periodic or SPS PUSCH, or a periodic or SPS PUCCH. In one configuration, the first set of slots may be scheduled dynamically. The second set of slots may be scheduled dynamically. The at least one same slot may be omitted from the second set of slots. In one configuration, the mTRP communication may be SDMed. The mTRP communication may be associated with at least one PDSCH. In one configuration, the mTRP communication may be FDMed. The mTRP communication may be associated with at least one PDSCH. In one configuration, the sTRP communication may be associated with all allocated RBs for communication with the UE. In one configuration, the sTRP communication may be associated with one half of all allocated RBs for communication with the UE. In one configuration, the first set of slots may be scheduled dynamically. The second set of slots may be scheduled semi-statically. The mTRP communication may be associated with one or more of PDCCH monitoring, a periodic or SPS PUSCH, or a periodic or SPS PUCCH. In one configuration, the means for scheduling the first set of slots for simultaneous sensing and sTRP communication with the UE may be further configured to transmit a first indication scheduling the first set of slots for the simultaneous sensing and the sTRP communication to the UE. The means for scheduling the second set of slots for multi-TRP communication with the UE may be further configured to transmit a second indication scheduling the second set of slots for the multi-TRP communication to the UE.

The means may be the component 199 of the network entity 1602 configured to perform the functions recited by the means. As described *supra,* the network entity 1602 may include the TX processor 316, the RX processor 370, and the controller/processor 375. As such, in one configuration, the means may be the TX processor 316, the RX processor 370, and/or the controller/processor 375 configured to perform the functions recited by the means.

Referring back to FIGs. 4-16, a network node may schedule a first set of slots for simultaneous sensing and sTRP communication with a UE. The network node may transmit a first indication scheduling the first set of slots for simultaneous sensing and sTRP communication to the UE. The network node may schedule a second set of slots for mTRP communication with the UE. The network node may transmit a second indication scheduling the second set of slots for mTRP communication to the UE. The first set of slots and the second set of slots may include at least one same slot. The network node may be associated with a first TRP and a second TRP. Accordingly, the sTRP-mTRP slot pattern associated with periodic consecutive sensing slots may be optimized. Furthermore, the behavior of the system may be defined where a conflict may exist at one or more slots between a scheduled mTRP communication and a scheduled simultaneous sensing and sTRP communication.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not limited to the specific order or hierarchy presented.

Reference to an element in the singular does not mean "one and only one" unless specifically so stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Sets should be interpreted as a set of elements where the elements number one or more. Accordingly, for a set of X, X would include one or more elements. If a first apparatus receives data from or transmits data to a second apparatus, the data may be received/transmitted directly between the first and second apparatuses, or indirectly between the first and second apparatuses through a set of apparatuses. All structural and functional equivalents to the elements of the various aspects described throughout this disclosure that are known or later come to be known to those of ordinary skill in the art are expressly incorporated herein by reference and are encompassed by the claims. Moreover, nothing disclosed herein is dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, the phrase "based on" shall not be construed as a reference to a closed set of information, one or more conditions, one or more factors, or the like. In other words, the phrase "based on A" (where "A" may be information, a condition, a factor, or the like) shall be construed as "based at least on A" unless specifically recited differently.

## Claims

1. An apparatus for wireless communication at a user equipment, UE, comprising:
a memory; and
at least one processor coupled to the memory and, based at least in part on information stored in the memory, the at least one processor is configured to:
receive (1202) a first indication scheduling a first set of slots for simultaneous sensing and single-transmit receive point, sTRP, communication from a network node; and
receive (1204) a second indication scheduling a second set of slots for multi-TRP, mTRP, communication from the network node, the first set of slots and the second set of slots including at least one same slot, the network node being associated with a first TRP and a second TRP.

2. The apparatus of claim 1, wherein the first set of slots is scheduled semi-statically, the second set of slots is scheduled dynamically, the mTRP communication is time division multiplexed, TDMed, and the sTRP communication with the UE is associated with a single TRP between the first TRP and the second TRP;
wherein, optionally, the first TRP and the second TRP are associated with an equal number of slots across the first set of slots and the second set of slots in relation to the sTRP communication or the mTRP communication.

3. The apparatus of claim 1, wherein the first set of slots is scheduled semi-statically, the second set of slots is scheduled semi-statically, and the at least one same slot is omitted from the second set of slots; wherein the first set of slots is associated with a preconfigured transmission configuration indicator, TCI, state; or
wherein the mTRP communication is associated with one or more of physical downlink control channel, PDCCH, monitoring, a periodic or semi-persistent, SPS, physical uplink shared channel, PUSCH, or a periodic or SPS physical uplink control channel, PUCCH.

4. The apparatus of claim 1, wherein the first set of slots is scheduled dynamically, the second set of slots is scheduled dynamically, and the at least one same slot is omitted from the second set of slots; wherein the mTRP communication is spatial division multiplexed, SDMed, and the mTRP communication is associated with at least one physical downlink shared channel, PDSCH; or wherein the mTRP communication is frequency division multiplexed, FDMed, and the mTRP communication is associated with at least one physical downlink shared channel, PDSCH.

5. The apparatus of claim 4, wherein the mTRP communication is frequency division multiplexed, FDMed, and the mTRP communication is associated with at least one physical downlink shared channel, PDSCH,
wherein the sTRP communication is associated with all allocated resource blocks, RBs, for communication with the UE; or wherein the sTRP communication is associated with one half of all allocated resource blocks, RBs, for communication with the UE.

6. A method of wireless communication at a user equipment, UE, comprising:
receiving (12020) a first indication scheduling a first set of slots for simultaneous sensing and single-transmit receive point, sTRP, communication from a network node; and
receiving (1204) a second indication scheduling a second set of slots for multi-TRP, mTRP, communication from the network node, the first set of slots and the second set of slots including at least one same slot, the network node being associated with a first TRP and a second TRP.

7. An apparatus for wireless communication at a network node, comprising:
a memory; and
at least one processor coupled to the memory and, based at least in part on information stored in the memory, the at least one processor is configured to:
schedule (1302, 1402) a first set of slots for simultaneous sensing and single-transmit receive point, sTRP, communication with a user equipment, UE; and
schedule (1304, 1404) a second set of slots for multi-TRP, mTRP, communication with the UE, the first set of slots and the second set of slots including at least one same slot, the network node being associated with a first TRP and a second TRP.

8. The apparatus of claim 7, wherein the first set of slots is scheduled semi-statically, the second set of slots is scheduled dynamically, the mTRP communication is time division multiplexed, TDMed, and the sTRP communication with the UE is associated with a single TRP between the first TRP and the second TRP; wherein, optionally, the first TRP and the second TRP are associated with an equal number of slots across the first set of slots and the second set of slots in relation to the sTRP communication with the UE or the mTRP communication with the UE.

9. The apparatus of claim 7, wherein the first set of slots is scheduled semi-statically, the second set of slots is scheduled semi-statically, and the at least one same slot is omitted from the second set of slots; wherein the first set of slots is associated with a preconfigured transmission configuration indicator, TCI state; or wherein the mTRP communication with the UE is associated with one or more of physical downlink control channel, PDCCH, monitoring, a periodic or semi-persistent, SPS, physical uplink shared channel, PUSCH, or a periodic or SPS physical uplink control channel, PUCCH.

10. The apparatus of claim 7, wherein the first set of slots is scheduled dynamically, the second set of slots is scheduled dynamically, and the at least one same slot is omitted from the second set of slots; wherein the mTRP communication with the UE is spatial division multiplexed, SDMed, and the mTRP communication with the UE is associated with at least one physical downlink shared channel, PDSCH; or wherein the mTRP communication with the UE is frequency division multiplexed, FDMed, and the mTRP communication with the UE is associated with at least one physical downlink shared channel, PDSCH.

11. The apparatus of claim 10, wherein the mTRP communication with the UE is frequency division multiplexed, FDMed, and the mTRP communication with the UE is associated with at least one physical downlink shared channel, PDSCH,
wherein the sTRP communication with the UE is associated with all allocated resource blocks, RBs, for communication with the UE; or wherein the sTRP communication with the UE is associated with one half of all allocated resource blocks, RBs, for communication with the UE.

12. The apparatus of claim 1 or claim 7, wherein the first set of slots is scheduled dynamically, the second set of slots is scheduled semi-statically, and the mTRP communication with the UE is associated with one or more of physical downlink control channel, PDCCH, monitoring, a periodic or semi-persistent, SPS, physical uplink shared channel, PUSCH, or a periodic or SPS physical uplink control channel, PUCCH.

13. The apparatus of claim 7, wherein to schedule the first set of slots for simultaneous sensing and sTRP communication with the UE, the at least one processor is configured to: transmit (1402a) a first indication scheduling the first set of slots for the simultaneous sensing and the sTRP communication to the UE,
wherein to schedule the second set of slots for multi-TRP communication with the UE, the at least one processor is configured to: transmit (1404a) a second indication scheduling the second set of slots for the multi-TRP communication to the UE.

14. The apparatus of claim 1 or claim 7, further comprising a transceiver coupled to the at least one processor.

15. A method of wireless communication at a network node, comprising:
scheduling (1302, 1402) a first set of slots for simultaneous sensing and single-transmit receive point, sTRP, communication with a user equipment, UE; and
scheduling (1304, 1404) a second set of slots for multi-TRP, mTRP, communication with the UE, the first set of slots and the second set of slots including at least one same slot, the network node being associated with a first TRP and a second TRP.

## Patentansprüche

1. Vorrichtung zur drahtlosen Kommunikation an einem UE (User Equipment), die Folgendes umfasst:
einen Speicher; und
mindestens einen mit dem Speicher gekoppelten Prozessor, wobei der mindestens eine Prozessor, zumindest teilweise auf der Basis von im Speicher gespeicherten Informationen, konfiguriert ist zum:
Empfangen (1202) einer ersten Angabe, die einen ersten Satz von Slots für gleichzeitige Erfassung und sTRP-(Single-Transmit Receive Point)-Kommunikation von einem Netzwerkknoten plant; und
Empfangen (1204) einer zweiten Angabe, die einen zweiten Satz von Slots für mTRP-(multi-TRP)-Kommunikation von dem Netzwerkknoten plant, wobei der erste Satz von Slots und der zweite Satz von Slots mindestens einen gemeinsamen Slot enthalten, wobei der Netzwerkknoten mit einem ersten TRP und einem zweiten TRP assoziiert ist.

2. Vorrichtung nach Anspruch 1, wobei der erste Satz von Slots semistatisch geplant wird, der zweite Satz von Slots dynamisch geplant wird, die mTRP-Kommunikation zeitmultiplexiert (TDM) ist und die sTRP-Kommunikation mit dem UE mit einem einzelnen TRP zwischen dem ersten TRP und dem zweiten TRP assoziiert ist;
wobei optional der erste TRP und der zweite TRP in Bezug auf die sTRP-Kommunikation oder die mTRP-Kommunikation mit einer gleichen Anzahl von Slots über den ersten Satz von Slots und den zweiten Satz von Slots assoziiert sind.

3. Vorrichtung nach Anspruch 1, wobei der erste Satz von Slots semistatisch geplant wird, der zweite Satz von Slots semistatisch geplant wird und der mindestens eine gleiche Slot aus dem zweiten Satz von Slots weggelassen wird; wobei der erste Satz von Slots mit einem vorkonfigurierten TCI-(Transmission Configuration Indicator)-Zustand assoziiert ist; oder
wobei die mTRP-Kommunikation mit einem oder mehreren von PDCCH-(Physical Downlink Control Channel)-Überwachung, einem periodischen oder SPS (semi-persistent) PUSCH (Physical Uplink Shared Channel) und einem periodischen oder SPS PUCCH (Physical Uplink Control Channel) assoziiert ist.

4. Vorrichtung nach Anspruch 1, wobei der erste Satz von Slots dynamisch geplant wird, der zweite Satz von Slots dynamisch geplant wird und der mindestens eine gleiche Slot aus dem zweiten Satz von Slots weggelassen wird; wobei die mTRP-Kommunikation raummultiplexiert (SDM) ist und die mTRP-Kommunikation mit mindestens einem PDSCH (Physical Downlink Shared Channel) assoziiert ist; oder wobei die mTRP-Kommunikation frequenzmultiplexiert (FDM) ist und die mTRP-Kommunikation mit mindestens einem PDSCH (Physical Downlink Shared Channel) assoziiert ist.

5. Vorrichtung nach Anspruch 4, wobei die mTRP-Kommunikation frequenzmultiplexiert (FDM) ist und die mTRP-Kommunikation mit mindestens einem PDSCH (Physical Downlink Shared Channel) assoziiert ist,
wobei die sTRP-Kommunikation mit allen zugewiesenen RBs (Resource Blocks) für die Kommunikation mit dem UE assoziiert ist; oder wobei die sTRP-Kommunikation mit der Hälfte aller zugewiesenen RBs (Resource Blocks) für die Kommunikation mit dem UE assoziiert ist.

6. Verfahren zur drahtlosen Kommunikation an einem UE (User Equipment), das Folgendes beinhaltet:
Empfangen (1202) einer ersten Angabe, die einen ersten Satz von Slots für gleichzeitige Erfassung und sTRP-(Single-Transmit Receive Point)-Kommunikation von einem Netzwerkknoten plant; und
Empfangen (1204) einer zweiten Angabe, die einen zweiten Satz von Slots für mTRP-(multi-TRP)-Kommunikation von dem Netzwerkknoten plant, wobei der erste Satz von Slots und der zweite Satz von Slots mindestens einen gemeinsamen Slot enthalten, wobei der Netzwerkknoten mit einem ersten TRP und einem zweiten TRP assoziiert ist.

7. Vorrichtung für drahtlose Kommunikation an einem Netzwerkknoten, die Folgendes umfasst:
einen Speicher; und
mindestens einen mit dem Speicher gekoppelten Prozessor, wobei der mindestens eine Prozessor, zumindest teilweise auf der Basis von im Speicher gespeicherten Informationen, konfiguriert ist zum:
Planen (1302, 1402) eines ersten Satzes von Slots für gleichzeitige Erfassung und sTRP-(Single-Transmit Receive Point)-Kommunikation mit einem UE (User Equipment); und
Planen (1304, 1404) eines zweiten Satzes von Slots für mTRP-(multi-TRP)-Kommunikation mit dem UE, wobei der erste Satz von Slots und der zweite Satz von Slots mindestens einen gleichen Slot enthalten und der Netzwerkknoten mit einem ersten TRP und einem zweiten TRP assoziiert ist.

8. Vorrichtung nach Anspruch 7, wobei der erste Satz von Slots semistatisch geplant wird, der zweite Satz von Slots dynamisch geplant wird, die mTRP-Kommunikation zeitmultiplexiert (TDM) ist und die sTRP-Kommunikation mit dem UE mit einem einzigen TRP zwischen dem ersten TRP und dem zweiten TRP assoziiert ist; wobei optional der erste TRP und der zweite TRP in Bezug auf die sTRP-Kommunikation mit dem UE oder die mTRP-Kommunikation mit dem UE mit einer gleichen Anzahl von Slots über den ersten Satz von Slots und den zweiten Satz von Slots hinweg assoziiert sind.

9. Vorrichtung nach Anspruch 7, wobei der erste Satz von Slots semistatisch geplant wird, der zweite Satz von Slots semistatisch geplant wird und der mindestens eine gleiche Slot aus dem zweiten Satz von Slots weggelassen wird; wobei der erste Satz von Slots mit einem vorkonfigurierten TCI-(Transmission Configuration Indicator)-Zustand assoziiert ist; oder wobei die mTRP-Kommunikation mit dem UE mit einem oder mehreren von PDCCH-(Physical Downlink Control Channel)-Überwachung, einem periodischen oder SPS (semi-persistent) PUSCH (Physical Uplink Shared Channel) und einem periodischen oder SPS PUCCH (Physical Uplink Control Channel) assoziiert ist.

10. Vorrichtung nach Anspruch 7, wobei der erste Satz von Slots dynamisch geplant wird, der zweite Satz von Slots dynamisch geplant wird und der mindestens eine gleiche Slot aus dem zweiten Satz von Slots weggelassen wird; wobei die mTRP-Kommunikation raummultiplexiert (SDM) ist und die mTRP-Kommunikation mit dem UE mit mindestens einem PDSCH (Physical Downlink Shared Channel) assoziiert ist; oder wobei die mTRP-Kommunikation mit dem UE frequenzmultiplexiert (FDM) ist und die mTRP-Kommunikation mit dem UE mit mindestens einem PDSCH (Physical Downlink Shared Channel) assoziiert ist.

11. Vorrichtung nach Anspruch 10, wobei die mTRP-Kommunikation mit dem UE frequenzmultiplexiert (FDM) ist und die mTRP-Kommunikation mit dem UE mit mindestens einem PDSCH (Physical Downlink Shared Channel) assoziiert ist,
wobei die sTRP-Kommunikation mit dem UE mit allen zugewiesenen RBs (Resource Blocks) für die Kommunikation mit dem UE assoziiert ist; oder wobei die sTRP-Kommunikation mit dem UE mit der Hälfte aller zugewiesenen RBs (Resource Blocks) für die Kommunikation mit dem UE assoziiert ist.

12. Vorrichtung nach Anspruch 1 oder Anspruch 7, wobei der erste Satz von Slots dynamisch eingeplant wird, der zweite Satz von Slots semistatisch eingeplant wird und die mTRP-Kommunikation mit dem UE mit einem oder mehreren von PDCCH-(Physical Downlink Control Channel)-Überwachung, einem periodischen oder SPS (semi-persistent) PUSCH (Physical Uplink Shared Channel) und einem periodischen oder SPS PUCCH (Physical Uplink Control Channel) assoziiert ist.

13. Vorrichtung nach Anspruch 7, wobei zum Planen des ersten Satzes von Slots für gleichzeitige Erfassung und sTRP-Kommunikation mit dem UE der mindestens eine Prozessor konfiguriert ist zum: Senden (1402a) einer ersten Angabe, die den ersten Satz von Slots für gleichzeitige Erfassung und sTRP-Kommunikation plant, zu dem UE,
wobei zum Planen des zweiten Satzes von Slots für Multi-TRP-Kommunikation mit dem UE der mindestens eine Prozessor konfiguriert ist zum: Senden (1404a) einer zweiten Angabe, die den zweiten Satz von Slots für die Multi-TRP-Kommunikation plant, zu dem UE.

14. Vorrichtung nach Anspruch 1 oder Anspruch 7, die ferner einen mit dem mindestens einen Prozessor gekoppelten Transceiver umfasst.

15. Verfahren zur drahtlosen Kommunikation an einem Netzwerkknoten, das Folgendes beinhaltet:
Planen (1302, 1402) eines ersten Satzes von Slots für gleichzeitige Erfassung und sTRP-(Single-Transmit Receive Point)-Kommunikation mit einem UE (User Equipment); und
Planen (1304, 1404) eines zweiten Satzes von Slots für mTRP-(multi-TRP)-Kommunikation mit dem UE, wobei der erste Satz von Slots und der zweite Satz von Slots mindestens einen gleichen Slot enthalten und der Netzwerkknoten mit einem ersten TRP und einem zweiten TRP assoziiert ist.

## Revendications

1. Appareil de communication sans fil au niveau d'un équipement utilisateur, UE, comprenant :
une mémoire ; et
au moins un processeur couplé à la mémoire et, sur la base au moins en partie d'informations stockées dans la mémoire, l'au moins un processeur est configuré pour :
recevoir (1202) une première indication ordonnançant un premier ensemble de tranches de temps pour une détection simultanée et une communication de point de transmission-réception unique, sTRP, depuis un nœud de réseau ; et
recevoir (1204) une seconde indication ordonnançant un second ensemble de tranches de temps pour une communication de multiples TRP, mTRP, depuis le nœud de réseau, le premier ensemble de tranches de temps et le second ensemble de tranches de temps comportant au moins une même tranche de temps, le nœud de réseau étant associé à un premier TRP et à un second TRP.

2. Appareil selon la revendication 1, dans lequel le premier ensemble de tranches de temps est ordonnancé semi-statiquement, le second ensemble de tranches de temps est ordonnancé dynamiquement, la communication mTRP est multiplexée par répartition dans le temps, TDMed, et la communication sTRP avec l'UE est associée à un seul TRP entre le premier TRP et le second TRP ;
dans lequel, éventuellement, le premier TRP et le second TRP sont associés à un nombre égal de tranches de temps durant le premier ensemble de tranches de temps et le second ensemble de tranches de temps en relation avec la communication sTRP ou la communication mTRP.

3. Appareil selon la revendication 1, dans lequel le premier ensemble de tranches de temps est ordonnancé semi-statiquement, le second ensemble de tranches de temps est ordonnancé semi-statiquement, et au moins une même tranche de temps est omise du second ensemble de tranches de temps ; dans lequel le premier ensemble de tranches de temps est associé à un état d'indicateur de configuration de transmission, TCI, préconfiguré ; ou
dans lequel la communication mTRP est associée à une surveillance d'un ou plusieurs canaux physiques de commande de liaison descendante, PDCCH, un canal physique partagé de liaison montante, PUSCH, périodique ou semi-persistant, SPS, ou un canal physique de commande de liaison montante, PUCHH, périodique ou SPS.

4. Appareil selon la revendication 1, dans lequel le premier ensemble de tranches de temps est ordonnancé dynamiquement, le second ensemble est ordonnancé dynamiquement, et au moins une même tranche de temps est omise du second ensemble de tranches de temps ; dans lequel la communication mTRP est multiplexée par répartition dans l'espace, SDMed, et la communication mTRP est associée à au moins un canal physique partagé de liaison descendante, PDSCH ; ou dans lequel la communication mTRP est multiplexée par répartition en fréquence, FDM, et la communication mTRP est associée à au moins un canal physique partagé de liaison descendante, PDSCH.

5. Appareil selon la revendication 4, dans lequel la communication mTRP est multiplexée par répartition en fréquence, FDMed, et la communication mTRP est associée à au moins un canal physique partagé de liaison descendante, PDSCH,
dans lequel la communication sTRP est associée à tous les blocs de ressources, RB, alloués, pour une communication avec l'UE ; ou dans lequel la communication sTRP est associée à la moitié de tous les blocs de ressources, RB, alloués pour une communication avec l'UE.

6. Procédé de communication sans fil au niveau d'un équipement utilisateur, UE, comprenant :
la réception (12020) d'une première indication ordonnançant un premier ensemble de tranches de temps pour une détection simultanée et une communication de point de transmission-réception unique, sTRP, depuis un nœud de réseau ; et
la réception (1204) d'une seconde indication ordonnançant un second ensemble de tranches de temps pour une communication de multiples TRP, mTRP, depuis le nœud de réseau, le premier ensemble de tranches de temps et le second ensemble de tranches de temps comportant au moins une même tranche de temps, le nœud de réseau étant associé à un premier TRP et à un second TRP.

7. Appareil de communication sans fil au niveau d'un nœud de réseau, comprenant :
une mémoire ; et
au moins un processeur couplé à la mémoire et, sur la base au moins en partie d'informations stockées dans la mémoire, l'au moins un processeur est configuré pour :
ordonnancer (1302, 1402) un premier ensemble de tranches de temps pour une détection simultanée et une communication de point de transmission-réception unique, sTRP, avec un équipement utilisateur, UE ; et
ordonnancer (1304, 1404) un second ensemble de tranches de temps pour une communication de multiples TRP, mTRP avec l'UE, le premier ensemble de tranches de temps et le second ensemble de tranches de temps comportant au moins une même tranche de temps, le nœud de réseau étant associé à un premier TRP et à un second TRP.

8. Appareil selon la revendication 7, dans lequel le premier ensemble de tranches de temps est ordonnancé semi-statiquement, le second ensemble de tranches de temps est ordonnancé dynamiquement, la communication mTRP est multiplexée par répartition dans le temps, TDM, et la communication sTRP avec l'UE est associée à un seul TRP entre le premier TRP et le second TRP ; dans lequel, éventuellement, le premier TRP et le second TRP sont associés à un nombre égal de tranches de temps durant le premier ensemble de tranches de temps et le second ensemble de tranches de temps en relation avec la communication sTRP avec l'UE ou la communication mTRP avec l'UE.

9. Appareil selon la revendication 7, dans lequel le premier ensemble de tranches de temps est ordonnancé semi-statiquement, le second ensemble de tranches de temps est ordonnancé semi-statiquement, et au moins une même tranche de temps est omise du second ensemble de tranches de temps ; dans lequel le premier ensemble de tranches de temps est associé à un état d'indicateur de configuration de transmission, TCI, préconfiguré ; ou dans lequel la communication mTRP avec l'UE est associée à une surveillance d'un ou plusieurs canaux physiques de commande de liaison descendante, PDCCH, un canal physique partagé de liaison montante, PUSCH, périodique ou semi-persistant, SPS, ou un canal physique de commande de liaison montante, PUCHH, périodique ou SPS.

10. Appareil selon la revendication 7, dans lequel le premier ensemble de tranches de temps est ordonnancé dynamiquement, le second ensemble de tranches de temps est ordonnancé dynamiquement, et au moins une même tranche de temps est omise du second ensemble de tranches de temps ; dans lequel la communication mTRP avec l'UE est multiplexée par répartition dans l'espace, SDM, et la communication mTRP avec l'UE est associée à au moins un canal physique partagé de liaison descendante, PDSCH ; ou dans lequel la communication mTRP avec l'UE est multiplexée par répartition en fréquence, FDM, et la communication mTRP avec l'UE est associée à au moins un canal physique partagé de liaison descendante, PDSCH.

11. Appareil selon la revendication 10, dans lequel la communication mTRP avec l'UE est multiplexée par répartition en fréquence, FDMed, et la communication mTRP avec l'UE est associée à au moins un canal physique partagé de liaison descendante, PDSCH, dans lequel la communication sTRP avec l'UE est associée à tous les blocs de ressources, RB, alloués pour une communication avec l'UE ; ou dans lequel la communication sTRP avec l'UE est associée à la moitié de tous les blocs de ressources, RB, alloués, pour une communication avec l'UE.

12. Appareil selon la revendication 1 ou la revendication 7, dans lequel le premier ensemble de tranches de temps est ordonnancé dynamiquement, le second ensemble de tranches de temps est ordonnancé semi-statiquement, et la communication mTRP avec l'UE est associée à une surveillance d'un ou plusieurs canaux physiques de commande de liaison descendante, PDCCH, un canal physique partagé de liaison montante, PUSCH, périodique ou semi-persistant, SPS, ou un canal physique de commande de liaison montante, PUCCH, périodique ou SPS.

13. Appareil selon la revendication 7, dans lequel pour ordonnancer le premier ensemble de tranches de temps pour une détection simultanée et une communication sTRP avec l'UE, l'au moins un processeur est configuré pour : transmettre (1402a) une première indication ordonnançant le premier ensemble de tranches de temps pour une détection simultanée et une communication sTRP vers l'UE,
dans lequel pour ordonnancer le second ensemble de tranches de temps pour une communication multi-TRP avec l'UE, l'au moins un processeur est configuré pour : transmettre (1404a) une seconde indication ordonnançant le second ensemble de tranches de temps pour la communication multi-TRP vers l'UE.

14. Appareil selon la revendication 1 ou la revendication 7, comprenant en outre un émetteur-récepteur couplé à l'au moins un processeur.

15. Procédé de communication sans fil au niveau d'un nœud de réseau, comprenant :
l'ordonnancement (1302, 1402) d'un premier ensemble de tranches de temps pour une détection simultanée et une communication de point de transmission-réception unique, sTRP, avec un équipement utilisateur, UE ; et
l'ordonnancement (1304, 1404) d'un second ensemble de tranches de temps pour une communication de multiples TRP, mTRP, avec l'UE, le premier ensemble de tranches de temps et le second ensemble de tranches de temps comportant au moins une même tranche de temps, le nœud de réseau étant associé à un premier TRP et à un second TRP.
